# EUROPEAN PATENT SPECIFICATION

(11) **EP 1 635 756 B1**
(45) Date of publication and mention of the grant of the patent: **09.04.2008**
(21) Application number: 04754881.3
(22) Date of filing: 09.06.2004
(51) Int. Cl.: A61G 5/02, B62K 5/04, B62K 21/00

(54) **MOBILITY ASSISTANCE VEHICLE**
MOBILITÄTSASSISTENZFAHRZEUG
VEHICULE D'AIDE A LA MOBILITE

(30) Priority: 11.06.2003 US 459153; 11.06.2003 US 477510 P; 11.09.2003 US 502405 P
(43) Date of publication of application: 22.03.2006
(73) Proprietor: Kudhara, Inc., Hinesburg, VT 05461 (US)
(72) Inventor: LINDSAY, Stuart, M., Burlington, VT 05401 (US); MCMATH, David, Winters, Hinesburg, VT 05461 (US); COWLES, Robert, Shelburne, VT 05482 (US); MATHEWSON, Timothy, C., Ferrisburgh, VT 05456 (US); WALKER, Mark, P., Jericho, VT 05465 (US)
(74) Representative: Müller-Boré & Partner Patentanwälte
(86) International application number: PCT/US2004/018414
(87) International publication number: WO 2004/110329

(56) References cited:
- WO-A-98/21081
- DE-C- 48 353
- DE-U- 8 711 302
- FR-A- 2 657 318
- GB-A- 110 639
- US-A- 4 572 535
- US-A- 5 028 064
- US-A- 5 297 810

## Description

### TECHNICAL FIELD

This invention relates to mobility assistance devices, and more particularly to a wheeled vehicle for handicapped or rehabilitating users, as well as able-bodied individuals.

### BACKGROUND

Wheelchair designs provide very limited mobility when one considers the types of terrain and the varied environments which they are incapable of navigating with any sense of ease.

There are many variations and adaptations derived from the conventional design, including both three-wheeled and four-wheeled assisted mobility devices. Unfortunately, many of these designs also have significant limitations when applied to a wide range of environments and varied terrain and are limited by a combination of one or more of the following: a high risk of tipping over on uneven ground; difficulty in riding over small or moderately-sized obstacles such as ruts, stones or missing pieces of pavement; a high incidence of fatigue or strain involving the hand and wrist; an inability to be operated by a rider having limited use of one hand or arm; difficulty in mounting and dismounting the vehicle due to inherent design constrictions; awkward or inefficient steering and propulsion functions. A vehicle is desired which satisfies a number of these functional limitations.

US 5 028 064 A discloses a racing wheel chair comprising a pair of large wheels and a positively steerable trailing wheel. The seat comprises a laterally pivotal structure with actuating cables connected to the seat back such that pivotal motion of the seat, as the athlete leans into a turn, is communicated to the trailing wheel to effect steering.

GB 110 639 A discloses a tricycle according to the preamble of claim 1, having front wheels, which are driven by separate handles and chains and sprockets. A steerable rear wheel is controlled either by pressing a padded backpiece or by actuating a hand lever.

### SUMMARY

The invention features a human-powered vehicle having a structural frame, two front wheels mounted to fixed axles at a forward portion of the frame for rotation, a seat secured to the frame, the seat positioned between the front wheels and adapted to pivot about a seat pivot axis, and a steerable rear wheel mounted to the frame behind the seat and defining a rear wheel kingpin axis, the rear wheel operably linked to the seat such that pivoting of the seat about the seat pivot axis causes pivoting the rear wheel about the kingpin axis to steer the vehicle, wherein at least one of the two front wheels is operably connected to a hand-operable crank for propulsion of the vehicle.

According to one aspect, the invention may additionally feature a human-powered vehicle comprising a structural frame, two front wheels mounted to a forward portion of the frame for rotation, a seat secured to the frame, the seat positioned between the front wheels and adapted to pivot about a seat pivot axis, a steerable rear wheel mounted to the frame behind the seat and defining a rear wheel kingpin axis, the rear wheel operably linked to the seat by a flexible chain assembly such that pivoting of the seat about the seat pivot axis causes pivoting of the rear wheel about the kingpin axis to steer the vehicle, and a neutral bias actuator connecting the seat and the structural frame and biasing the seat toward a neutral pivot position, wherein the seat pivot axis is declined toward the front of the vehicle to define a declination angle of between about 25 and 75 degrees, wherein at least one of the two front wheels is operably connected to a hand-operable crank for propulsion of the vehicle.

According to another aspect, the invention may additionally feature a human-powered vehicle comprising a structural frame, two front wheels mounted to a forward portion of the frame for rotation, a seat secured to the frame, the seat positioned between the front wheels and adapted to pivot about a seat pivot axis, a steerable rear wheel mounted to the frame behind the seat and defining a rear wheel kingpin axis, the rear wheel operably linked to the seat by a flexible chain assembly such that pivoting of the seat about the seat pivot axis causes pivoting of the rear wheel about the kingpin axis to steer the vehicle, and a neutral bias actuator connecting the seat and the structural frame and biasing the seat toward a neutral pivot position, wherein the seat pivot axis is substantially vertical, wherein at least one of the two front wheels is operably connected to a hand-operable crank for propulsion of the vehicle.

In one embodiment, the seat pivot axis is substantially vertical. In another embodiment, the seat pivot axis is declined toward the front of the vehicle to define a declination angle between about 25 and 75 degrees, more preferably between about 35 and 50 degrees and most preferably about 45 degrees. The seat pivots at the declination angle about at least two pivot points.

In one embodiment, at least one of the two front wheels of the vehicle is operably connected to a hand-operable crank for propulsion of the vehicle. The vehicle may include two independent hand-operable cranks, each crank operably connected to a corresponding one of the front wheels. In another embodiment, the hand-operable cranks of the vehicle are adapted to be rotatable about substantially horizontal axes disposed above the front wheels. The hand-operable cranks can include crank sprockets and the front wheels can include wheel sprockets, the crank sprockets being coupled to the wheel sprockets by means for positive engagement. The wheel sprockets can be coupled to the wheels by freewheel sprockets.

In another embodiment, each of the independent hand-operable cranks is adapted to drive a miter gear and each of the two front wheels is adapted to be driven by a bevel gear. The crank miter gear is coupled to the wheel hub bevel gear by a driveshaft for positive engagement. The hub bevel gear is attached to the front wheel hub for positive rotation of the front wheel.

In one embodiment, the seat is operably connected to the rear wheel by a flexible chain. The chain may be trained about a drive sprocket secured to the seat and a driven sprocket secured to the wheel, the chain being crossed between the drive and the driven sprockets. The seat is preferably operably linked to the rear wheel to define a steering ratio ofbetween about 3:1 and 6:1, and preferably about 4.5 :1.

In another embodiment, the seat is operably connected to the rear wheel by a flexible cable. The cable may be trained about a drive pulley secured to the seat and a driven pulley secured to the wheel, the cable being crossed between the drive and the driven pulleys.

In another example, the seat assembly is operably connected to the rear wheel assembly by one or more miter gears, bevel gears and a drive shaft. The seat assembly rotates upon a vertical axis and is adapted to rotate a bevel gear. The rear wheel assembly is adapted to be rotated by a miter gear. The seat assembly bevel gear is coupled to the rear wheel assembly miter gear by a drive shaft for positive engagement.

In another example, the seat assembly is operably connected to the rear wheel assembly by a drive sprocket, a chain, a driven sprocket, a drive shaft and two bevel gears. The seat assembly rotates upon a horizontal axis and is adapted to rotate a drive sprocket, a chain, and a driven sprocket. The rear wheel assembly is adapted to be rotated by a bevel gear. The seat assembly driven sprocket is coupled to the rear wheel assembly bevel gear by a drive shaft for positive engagement.

In another example, the seat assembly is operably connected to the rear wheel assembly by one or more bellcranks, hydraulic cylinders and hydraulic lines. The seat assembly rotates upon a vertical axis and is adapted to rotate a forward bellcrank. The rear wheel assembly is adapted to be rotated by a rear bellcrank. The seat assembly bellcrank is coupled to the rear wheel assembly bellcrank by hydraulic cylinders and hydraulic lines for positive engagement.

In another example, the seat assembly is operably connected to the rear wheel assembly by pinion gears and a gear rack. The seat assembly rotates upon a vertical axis and is adapted to rotate a forward pinion gear. The rear wheel assembly is adapted to be rotated by a rear pinion gear. The seat assembly pinion gear is coupled to the rear wheel assembly pinion gear by a gear rack for positive engagement.

The vehicle may further include independent hand-operable front and rear brakes. In accordance with further embodiments of the invention, the vehicle includes an actuator connecting the seat and the structural frame and biasing the seat toward a neutral pivot position. In one embodiment, the actuator is an adjustable pressurized cylinder or spring, for example. In another embodiment, the front wheels are each mounted for rotation about a respective axle secured to the frame by a fork spanning the wheel. In another embodiment, the front wheels are each mounted for rotation about a respective cantilevered axle secured to the frame. In one embodiment, to improve stability, the front wheels are slanted toward each other to define a positive camber angle with respect to vertical. According to one embodiment, the seat is positioned such that the rear wheel carries between about 20 and 40 percent of the total combined weight of the operator and the vehicle in a static condition.

In accordance with one example, the vehicle includes a steering assembly alignment device located beneath the seat, which includes a shaft collar affixed to the steering drive sprocket. The shaft collar is mounted upon the vertical seat post shaft, and held in position by one or more setscrews. Loosening the setscrews located within the shaft collar allows the drive sprocket to be adjusted relative to the seat post shaft, thereby adjusting alignment of the seat position relative to the position of the rear wheel.

In accordance with further example, the vehicle may include a damper connecting the rear wheel fork and the structural frame, allowing for improved steering and handling by preventing excessive rotational motion of the rear wheel fork assembly. In another embodiment, the damper is a bi-directional torsion spring which is fitted to the vertical steering tube and vehicle frame and provides a dampening effect to any rotational forces.

The vehicle may include a dual position handle attached to each of the hand operable cranks. The handle may be positioned in either a horizontal position for circular cranking or in a vertical position for forward and back reciprocal lever cranking.

The vehicle may include one or more looking brakes and one or more retractable footrests. The locking brake positively engages a frame mounted retractable pin and a brake disc affixed to each front wheel The retractable footrest is mounted to a forward position of the vehicle frame.

The mobility assistance device described herein can provide a safe, efficient and improved approach to enhanced mobility under a wide range of settings and conditions. In addition, it can enable a number of rehabilitative functions, as well as providing recreational cross-training opportunities for able-bodied individuals. It is particularly useful in enhancing the mobility of users with a lower extremity disability and a moderate level of upper body strength. The modes of steering and propulsion of the vehicles can be adapted and configured to complement the unique physical capabilities of such users. In addition to enhancing the mobility of the user, the vehicles can provide therapeutic and rehabilitative benefits.

One embodiment of the invention is especially well suited for providing mobility within confined indoor spaces while still providing excellent mobility for rough or uneven outdoor terrain. One example utilizes shaft-drive propulsion and a compact frame design.

The details of one or more embodiments of the invention are set forth in the accompanying drawings and the description below. Other features, objects, and advantages of the invention will be apparent from the description and drawings, and from me claims.

### DESCRIPTION OF DRAWINGS

FIG 1 is a perspective view of the vehicle according to one embodiment of the invention.
FIGS. 2A and 2B depict top views of the vehicle of FIG 1 in neutral and turned positions, respectively.
FIG 2C is a detailed side view of the vehicle of FIG 1, depicting the steering assembly alignment device.
FIG 2D is a detailed bottom view of the vehicle of FIG. 1.
FIG 3 is a side view of the vehicle of FIG 1.
FIG 4 is a front view of the vehicle of FIG 1.
FIG 5 is a detailed view of the rear wheel steering assembly of the vehicle of FIG 1.
FIG 6 is a perspective view of the vehicle according to another embodiment of the invention.
FIGS. 7A and 7B are top views of the vehicle of FIG 6, in neutral and turned positions respectively.
FIG 8 is a side view of the vehicle of FIG 6.
FIG 9 is a front view of the vehicle of FIG 6.
FIG 10 is a front view of an alternative embodiment of the vehicle of FIG 6 where the front drive wheels are cambered to enhance stability of the vehicle.
FIGS. 11A and 11B are side views of a reverse gear drive in an engaged and disengaged position, respectively.
FIGS. 12A and 12B show detailed views of the reverse gear of FIGS. 11A and 11B.
FIG 13 shows a detailed view of components of the reverse gear drive of FIGS. 11 and 12.
FIG. 14 is a perspective view of the vehicle according to another embodiment of the invention.
FIG. 15 is a side view of the vehicle in figure 14.
FIG. 16 is a front view of the vehicle in figure 14.
FIG. 17 is a perspective view of the shaft-drive propulsion for the vehicle in figure 14.
FIG. 18 is a front view of the (right side) shaft-drive propulsion for the vehicle in figure 14.
FIG. 19A is a side view of the vehicle according to another embodiment of the invention.
FIGS. 19B through 19D are various detail views of the vehicle of FIG. 19A.
FIG. 20 is a top view of the vehicle of FIG. 19 in a turned position.
FIGS. 21A and 21B are front views of the vehicle of FIG. 19 in neutral and turned positions, respectively.
FIG. 22 is a side view of the vehicle according to another embodiment of the invention.
FIG. 23A is a side view of the vehicle according to another embodiment of the invention.
FIGS. 23B and 23 C are various detail views of the vehicle of FIG. 23A.
FIG. 24 is a front view of the vehicle of FIGS. 23A through 23C.
FIGS. 25A and 25B are top views of an alternative embodiment of the vehicle of FIG. 1 where the steering is actuated by a hydraulic assembly in turned and neutral positions, respectively.
FIGS. 26A and 26B are top views of an alternative embodiment of the vehicle of FIG. 1 where the steering is actuated by a rack and pinion gear assembly in turned and neutral positions respectively.
FIG. 27 is a front view of the left side of an alternative embodiment of the crank arm assembly and an alternative embodiment of the brake assembly of the vehicle of FIG. 14.
FIGS. 28A and 28B are detail side views of the crank arm assembly of FIG. 27.
FIG. 29A is a rear view of a crank arm assembly and the (right side) locking brake assembly. FIG. 29B is a detail view of the locking brake assembly of FIG. 29A.
FIG. 30 is a detailed view of an alternative embodiment of a footrest assembly for the vehicles of FIGS. 1, 6, 14, 19A, 22 and 23A.

### DETAILED DESCRIPTION

Throughout the discussion of the illustrative embodiments, it is to be understood that in the figures, like references generally refer to like elements throughout the different views.

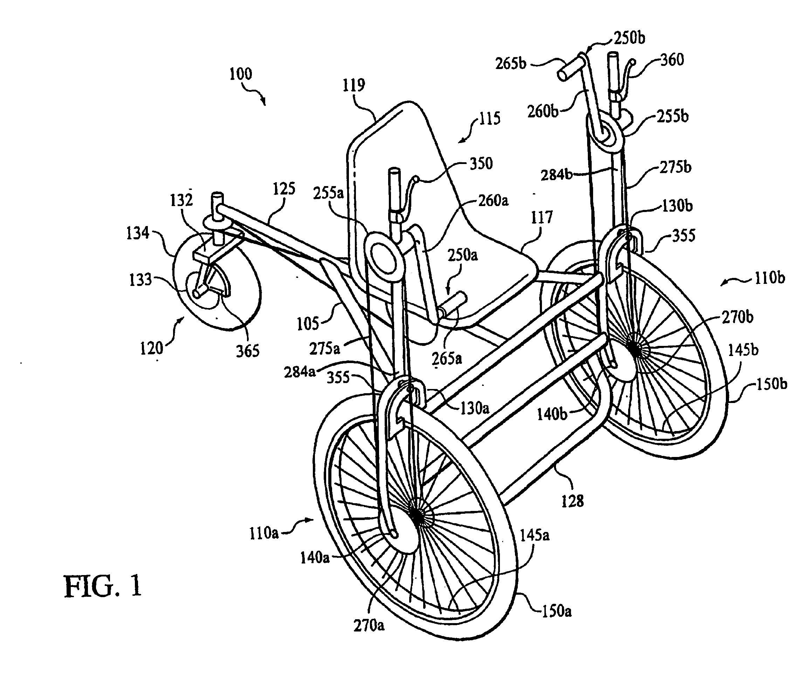

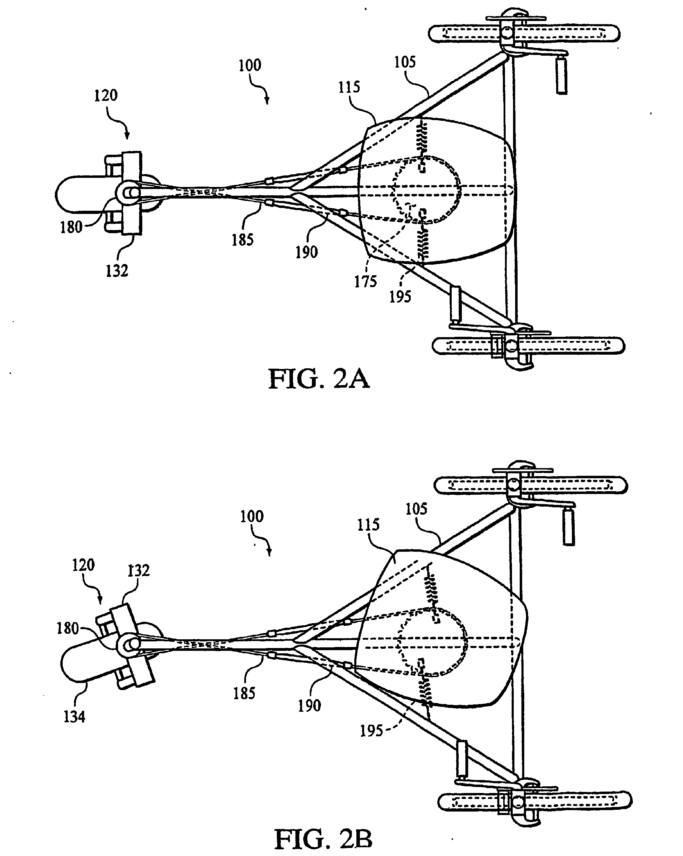

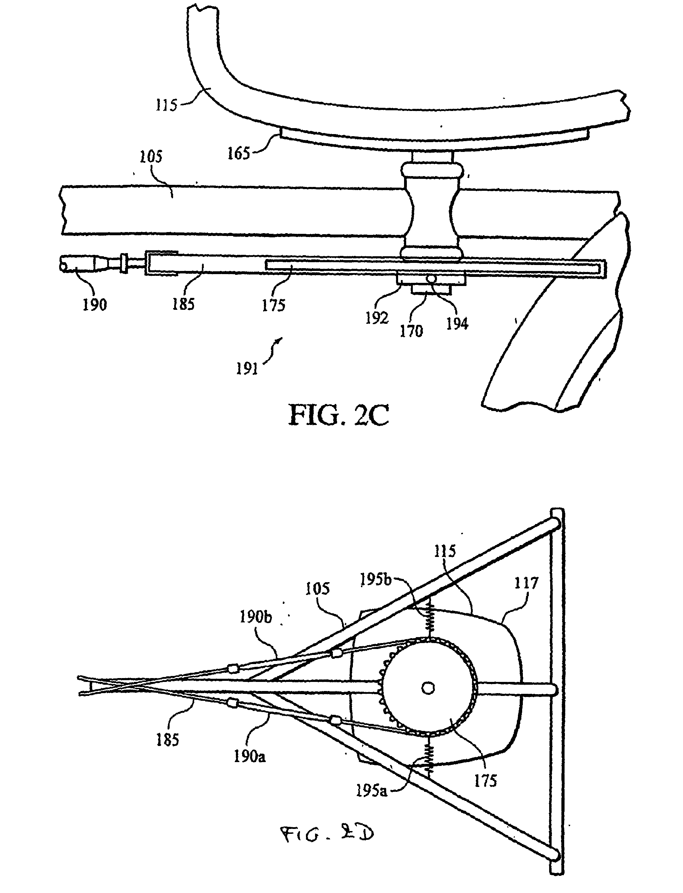

Referring to FIGS. 1, 2Aand 2B, a vehicle 100 has a structural frame 105, two front drive wheel assemblies 110a, 110b (hereafter collectively referred to as 110), a seat 115, and a steerable rear wheel assembly 120. In one embodiment, frame 105 is of tubular construction and consists of a horizontal equilateral triangle with an extension 125 to support the rear wheel assembly 120. The two front drive wheel assemblies 110 may include front forks 130a, 130b which are affixed to a forward portion of the frame 105 in front of the seat 115.

The seat 115 is rotatably mounted to the frame 105 between and aft of the two front drive wheels assemblies 110. The seat 115 is operably connected to the rear wheel assembly 120 such that rotation of the seat 115 causes rotation of the rear wheel assembly 120 to effect steering of the vehicle 100. Advantageously, the seat 115 includes a seat base 117 and a seat back 119, the seat base 117 declined rearward to keep the rider well positioned in the seat 115. In some embodiments, the vertical height of the seat base 117 is adjustable and the angle of inclination of the seat back 119 is adjustable. The seat may be constructed from fiberglass, metal or other substantially rigid material. Alternatively, the seat 115 is a simple platform with aluminum rails (not shown) having fabric mesh laced thereon for improved comfort on the seat base 117 and the seat back 119. The seat 115 may include layers of foam or other resilient materials to increase rider comfort and reduce fatigue. In some embodiments, the vehicle includes a footrest 128. The footrest 128 is attached to a forward lower portion of the frame 105 between the front drive wheel assemblies110. Appropriate configured rests (not shown) may be included along the footrest 128 for receiving and retaining the feet of the rider.

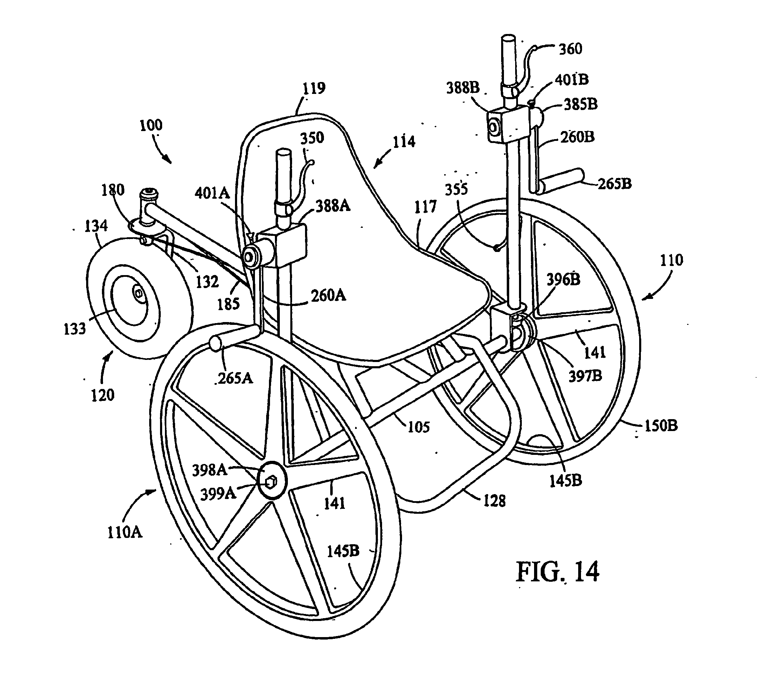

The rear wheel assembly 120 may include a rear fork 132, a rear hub and rim combination 133 for supporting a rear tire 134. In one embodiment, the rear tire has a high profile for improved rider comfort and stability of the vehicle 100. The front drive wheel assemblies 110 include front drive hubs 140a, 140b, spokes 141 or other means of attaching the hub to the rim, rims 145a, 145b for supporting front tires 150a, 150b. In one embodiment, the front drive hubs 140 are conventional bicycle-style hubs as shown in FIG 1. In another embodiment, the front drive hubs 140 are a cantilever-style axle and hub combination supported by a single wheelchair-style mount 399 (FIG 14). In one embodiment, the front forks 130 are 24-inch bicycle forks and may include gussets (not shown) to add additional strength.

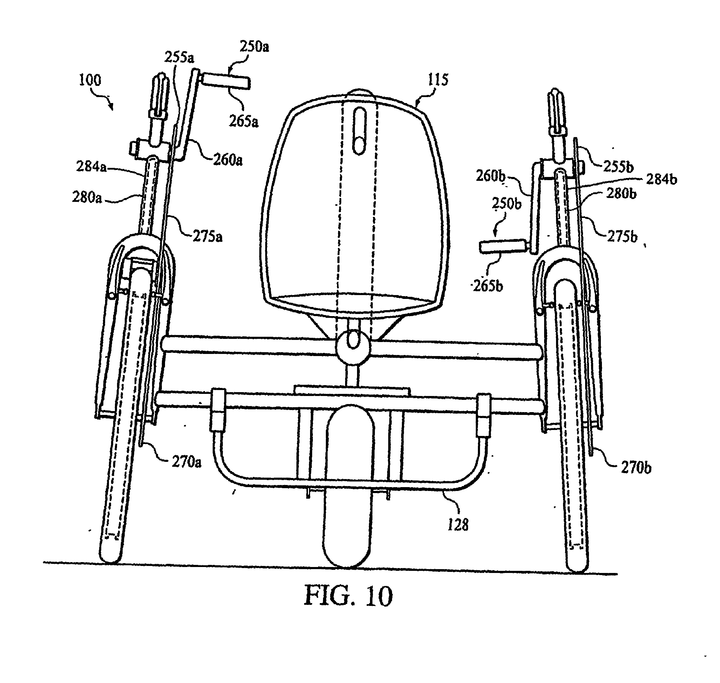

Advantageously, the vehicle 100 is configured to enable a user to mount and dismount the seat 115 independently or with minimal assistance. In one embodiment, the user mounts and dismounts the seat 115 from the front of the vehicle 100 between the front drive wheel assemblies 110. Mounting and dismounting the vehicle can vary according to the combined abilities and disabilities of the particular user. The overall size and configuration of the vehicle 100 may be modified to accommodate the size of the user and the intended application for the mobility device (e.g., indoor or outdoor use). In one embodiment, the seat 115 is located on the frame 105 aft of the front drive wheel assemblies 110 such that the rear tire 134 carries between about 20 and 40 percent of the total combined weight of the operator and the vehicle 100 in a static condition. The configuration of the frame 105 and the diameter of the rear wheel 134 ensures a relatively low center of gravity for enhanced stability of the vehicle 100, particularly over uneven terrain. In some embodiments the front drive wheel assemblies 110 are slanted toward each other above the frame 105 to define a positive camber angle with respect to vertical (see FIG. 10) to improve overall vehicle stability.

The frame 105 may be constructed from a range of materials including for example, aluminum, steel, or steel alloy, depending on the intended application of the vehicle 100. In one embodiment, the frame 105 is constructed of primarily 1 ¼-inch 4130 chrome moly tubing, which has been gas metal arc welded (MIG welded). The 4130 chrome moly tubing provides a high strength-to-weight ratio.

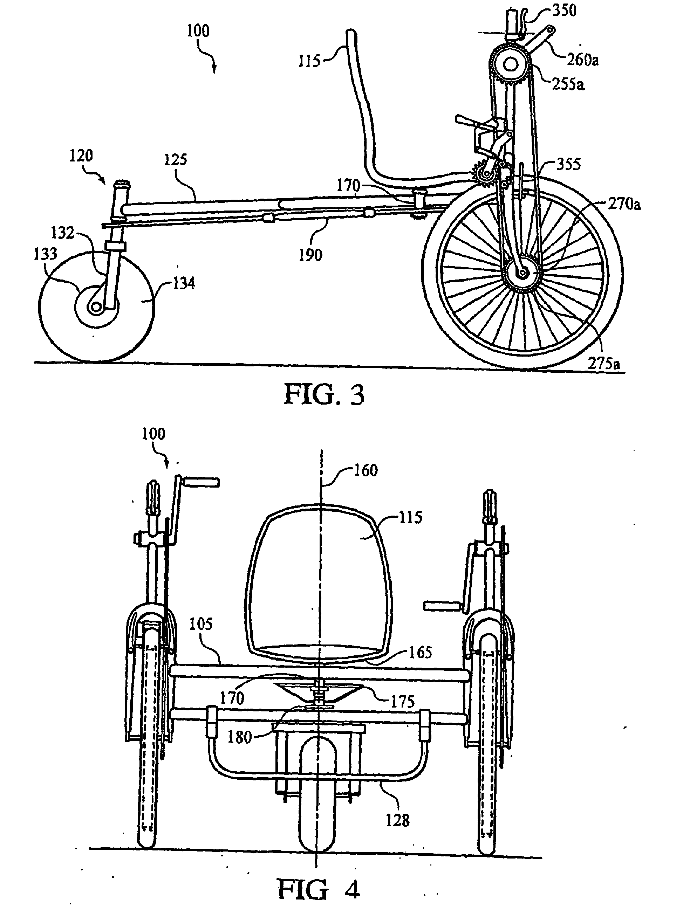

Referring now collectively to FIGS. 2A, 2B, 3 and 4, and in one embodiment, steering of the vehicle is accomplished by rotation of the seat 115 about a substantially vertical axis 160 (FIG 4). The seat 115 is mounted to a platform 165 that is affixed to the top end of a steering support shaft 170. The seat steering support shaft 170 is rotatably affixed to the frame with a bearing assembly to permit free rotation of the seat 115. A drive sprocket, pulley or chain ring 175 is affixed to the lower end of the seat support shaft 170. The rear fork 132 includes a driven rear sprocket or pulley 180 attached to the fork steerer tube 198 and rotatably affixed to the frame 105, with a headset or other bearing assembly. The driven rear sprocket or pulley 180 is attached to the fork steerer tube 198 below the bearing surface on the frame 105.

In one embodiment, a chain 185 is trained around the steering drive sprocket 175 and the rear driven sprocket 180 to operably connect the seat 115 and the rear wheel assembly 120. The chain 185 may be, for example, a flexible chain, roller chain, cable or nylon belt. Advantageously, the chain 185 is disposed about the drive sprocket 175 and the rear driven sprocket 180, crossed in a "figure-8" configuration as shown in FIGS. 1,2A and 2B. The chain 185 can include turnbuckles 190a, 190b to enable the adjustment of the tension of the chain 185 and prevent the chain 185 from derailing from the drive sprocket 175 and rear driven sprocket 180. In some embodiments, the relative position of the drive sprocket 175 can be adjusted to properly establish the chain line between the drive sprocket 175 and the rear driven sprocket 180.

Referring to FIG 2C, one embodiment of the vehicle 100 includes a steering alignment assembly 191 located beneath the seat 115, which includes a shaft collar 192 affixed to the steering drive sprocket 175. The shaft collar 192 is disposed upon the seat steering support shaft 170 and held in position by set screws 194.

Loosening the set screws 194 located within the shaft collar 192 allows the drive sprocket 175 to be adjusted relative to the seat steering post shaft 170, thereby adjusting alignment of the seat position relative to the position of the rear wheel assembly 120.

Referring to FIGS. 2C and 2D, and in one embodiment, the seat steering assembly 114, comprised of the seat 115, seat platform 165, seat steering support shaft 170, actuator 195, drive sprocket 175, steering shaft collar 192 and steering shaft collar set screw 194, includes at least one actuator 195 disposed between the platform 165 at a first end and the frame 105 at a second end. When the seat 115 is rotated for turning the vehicle 100, the actuator 195 is biased toward returning the seat 115 and consequently the rear wheel assembly 120 toward a centered, straight-ahead position. The actuator 195 may be a pre-tensioned adjustable spring, an adjustable pressurized cylinder, or a similar biasing device. In one embodiment, the actuator 195 is adjusted to accommodate, for example, the weight of the rider and the intended use of the vehicle 100.

In operation, when the rider rotates the seat 115 in one direction, the crossed chain 185 rotates the rear wheel assembly 120 in an opposite direction, but the vehicle turns in a direction corresponding to the direction of rotation of the seat 115. As shown in FIG 2B, rotating the seat 115 toward the right, results in a rotation of the rear wheel assembly 120 toward the left. This results in the vehicle 100 turning to the right, corresponding to the direction of rotation of the seat 115.

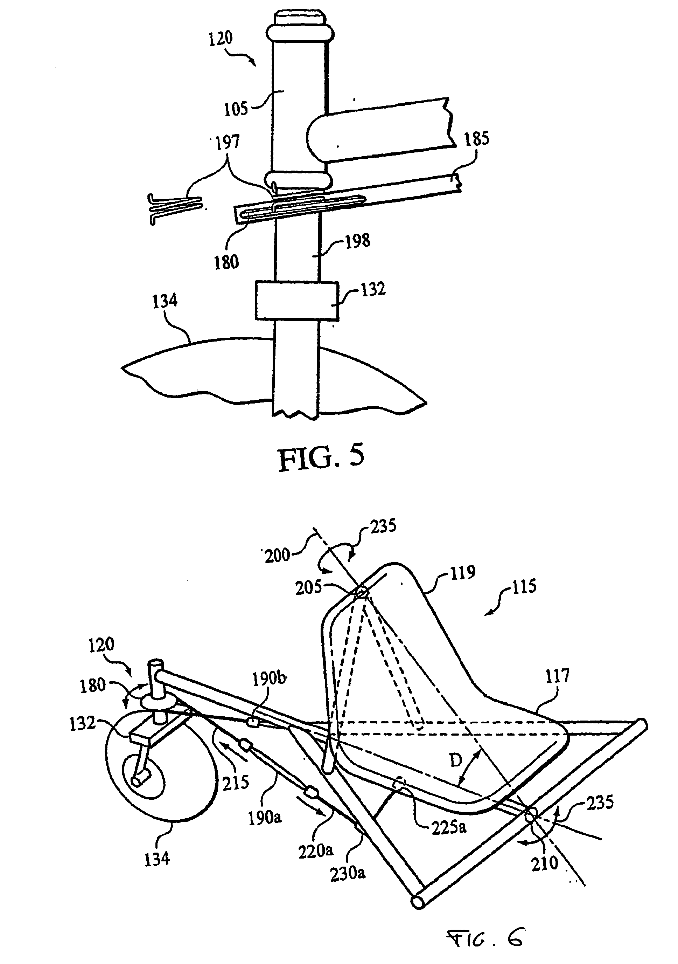

Referring to FIG. 5, in one embodiment, the vehicle may include a damper 197 connecting the rear wheel fork 132 and the structural frame 105, allowing for improved steering and handling by preventing excessive rotational motion of the rear wheel assembly 120. In one embodiment, the damper 197 is a bi-directional torsion spring which is fitted to the fork steerer tube 198 and the frame 105 and provides a dampening effect to any rotational forces.

Referring now to FIG. 6, in a second embodiment, steering of the vehicle 100 is accomplished by rotation of the seat 115 about a seat pivot axis 200, which is declined toward the front of the vehicle 100 to define a declination angle D. The declination angle D is preferably between about 25 degrees and 75 degrees, more preferably between about 35 degrees and 50 degrees and most preferably about 45 degrees. In one embodiment, the seat 115 is suspended on and rotates about an upper pivot attachment point 205 and a lower pivot attachment point 210 positioned along the seat pivot axis 200.

The upper attachment point 205 is mounted high on the seat back 119 and the lower pivot attachment point is mounted in a frontward portion of the seat base 117. As the angle of rotation of the seat 115 is not substantially parallel to the angle of rotation of the rear wheel assembly 120, as previously described with reference to FIGS. 1 to 2C, a modified steering linkage is utilized. A chain 215 is trained about the rear sprocket 180 of the rear wheel assembly 120. Two steering cables 220a, 220b attached to each end of the chain 215 at turnbuckles 190a, 190b operably connect the rear sprocket 180 of the rear wheel assembly 120 to the seat 115 at cable attachment points 225a, 225b. In one embodiment, the steering cables 220 are aircraft cables having swaged ends for attachment to the turnbuckles 190 and the seat 115.

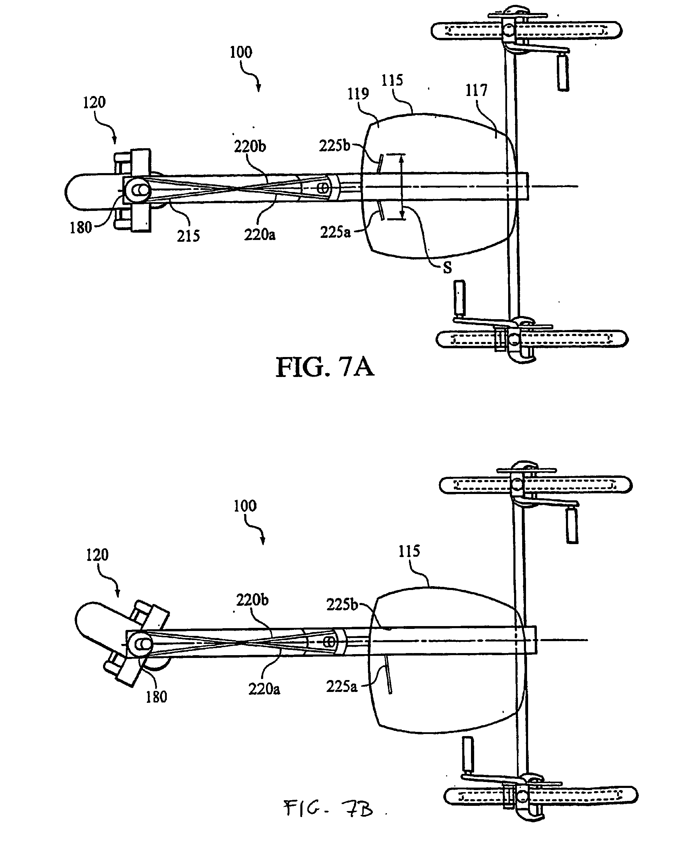

Advantageously, the chain 215 is crossed about the rear sprocket 180 in a "figure-8" configuration as shown in FIGS. 6, 7A and 7B. The turnbuckles 190 also provide adjustability of tension of the chain 215 about the rear sprocket 180. With renewed reference to FIG 6, the steering cables 220 are redirected from a substantially horizontal orientation to a substantially vertical orientation for attachment to the seat 115 at attachment points 225a, 225b through guides 230a, 230b. The guides 230 are affixed to the frame 105.

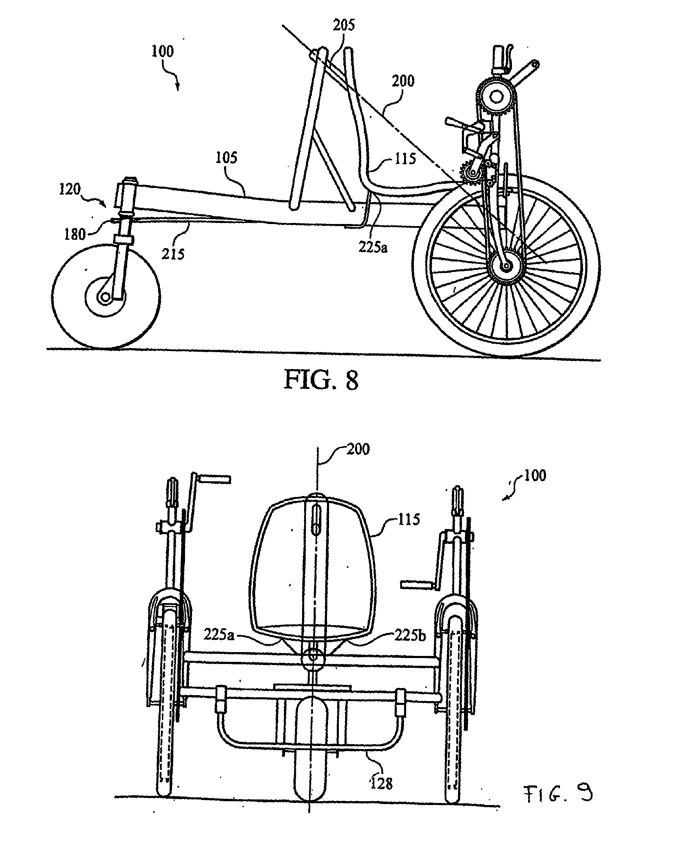

Referring now collectively to FIGS. 6, 7A-7B, 8 and 9, in operation, when the rider leans to turn the seat 115 in one direction, the chain 215 rotates the rear wheel assembly 120 in an opposite direction, but the vehicle turns in a direction corresponding to the direction of rotation of the seat 115. As shown in FIG 7B, rotating the seat back 119 toward the left results in a rotation of the rear wheel assembly 120 toward the right. This results in the vehicle 100 turning to the left. This left turn is initiated by the rider leaning to the left with the upper torso, which results in the seat base 117 rotating to the right. This steering configuration allows the rider to lean into turns and improves overall maneuverability and stability of the vehicle 100. According to one embodiment, the ratio between the diameter of the rear sprocket 180 and the distance between attachment points S is selected such that, the seat 115 rotates in the direction of arrows 235 about 10 degrees to the left and right to achieve a full range of steering of the vehicle 100.

Referring now to FIGS. 1 and 10, in one embodiment, the vehicle 100 includes two independent hand-operable crank assemblies 250a, 250b each operably connected to a corresponding front drive wheel assembly 110 for propulsion of the vehicle 100. The hand-operable crank assemblies 250 include crank sprockets 255a, 255b, crank arms 260a, 260b and handles 265a, 265b rotatably mounted to the crank arms 260a, 260b. In one embodiment, the crank sprockets 255a, 255b are conventional bicycle chain rings, the crank arms 260a, 260b are bicycle pedal cranks and the handles 265a, 265b are modified pedal spindle bolts surrounded with a padded sleeve for comfort and grip. The crank sprockets 255a, 255b are coupled to front wheel sprockets 270a, 270b by front drive chains 275a, 275b. The chains 275a, 275b are roller chains, toothed nylon belts, or similar flexible connecting means. In one embodiment, the crank sprockets 255 are each a 28-tooth chain ring and the front wheel sprockets 270 are each a 32-tooth chain ring. The front wheel sprockets 270 are coupled to front wheel drive hubs 140.

In operation, rotating the handles 265 in a first direction, rotates the front drive wheel assembly 110 and the vehicle 100 in a forward direction. Advantageously, the front wheel sprockets 270 may be freewheel sprockets, which allow the rider to pedal the vehicle 100 forward and coast if not pedaling. Also, by employing freewheel sprockets, the handles 265 can be rotated in a second direction to position the handles 265 for maximum leverage when, for example, starting the vehicle 100 from a stationary position. Tension in the front drive chains 275 is maintained and adjusted by changing the height of the hand operable crank assemblies 250 which are attached to the upper ends of the external adjuster tubes 284 which are disposed over the front fork steerer tubes 280a, 280b. The position of the external adjuster tubes 284 are held in place over the front fork steering tubes 280 by two pinch bolts, for example (not shown). Different lengths of the crank arms 260, varying configuration of handles 265, and crank sprockets 255 to front wheel sprockets 270 ratios are all contemplated by the invention to suit particular applications.

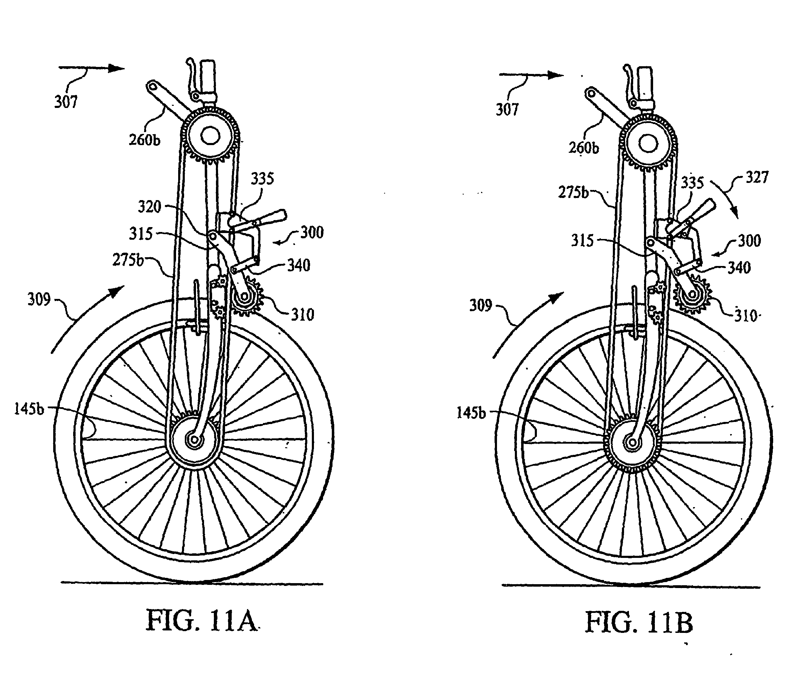

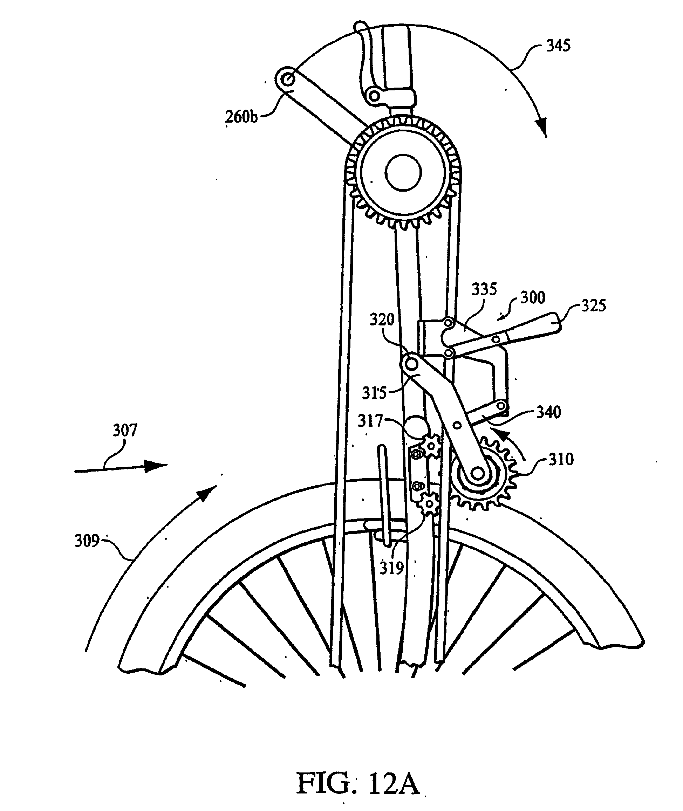

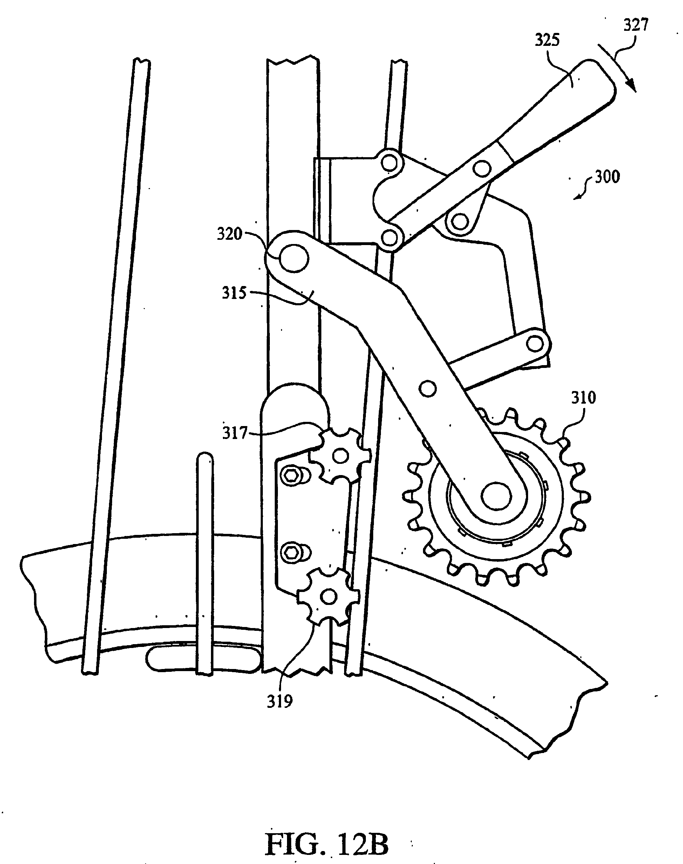

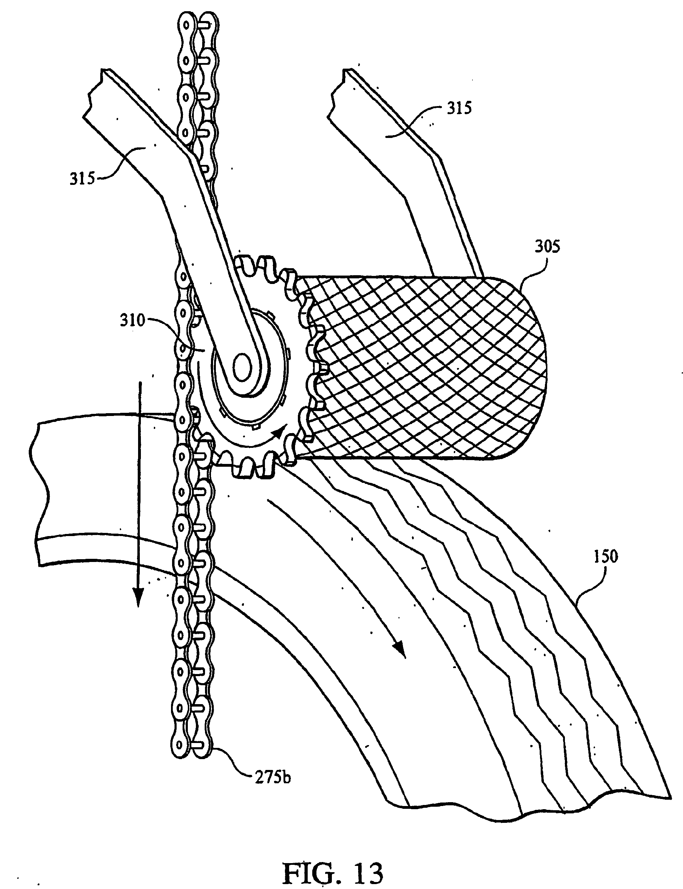

In one embodiment, the vehicle 100 may include a reverse gear drive assembly 300 as depicted in FIGS. 11A, 11B, 12A, 12B and 13. The reverse gear drive assembly 300 is attached to one or both adjustable crank assemblies 250 above the front drive wheel assemblies 110. The circumferential surface of a reverse roller 305 is scored or knurled for direct positive engagement with the front tires 150. The reverse direction is denoted by the arrow 307 and the direction of reverse rotation is denoted by the arrow 309. The reverse cog 310 is positioned for engagement of the chain 275 against upper and lower jockey rollers 317, 319. The reverse gear drive assembly 300 includes a reverse roller 305 (FIG.13) joined to a freewheeling reverse cog 310 which is rotatably attached to the bracket 315. The bracket 315 is attached rotatably to a pivot 320. A clamp handle 325 is rotatably attached to the bracket 315 via a first lever 335 and a second lever 340. In one embodiment, the clamp handle 325 of the reverse gear drive assembly 300 is a Destaco-type clamp which simultaneously locks the reverse roller 305 into position for engagement with the front tires 150 and the reverse cog 310 into position for engagement with the front drive chain 275 until manually released. Other suitable clamp devices are contemplated.

In operation, movement of the clamp handle 325 in the direction of the arrow 327 (FIG. 11B and 13) displaces the first and second levers 335, 340 thereby rotating bracket 315 about the pivot 320 and engaging the reverse roller 305 with the front tire 150 and engaging the reverse cog 310 with the chain 275b. With the reverse gear drive assembly 300 engaged, rotation of the crank arm 260 in the direction of the arrow 345 rotates the reverse cog 310 and the reverse roller 305 for rotation of the front drive wheels 110 in the direction necessary for rearward propulsion of the vehicle 100. The freewheeling reverse cog 310 allows for forward motion of the vehicle 100 while the reverse gear drive assembly 300 is engaged. Other types of reverse drive mechanisms are contemplated.

With renewed reference to FIG. 1, and in one embodiment, the vehicle 100 includes individual braking controls. A first front brake lever 350 controls one or both of the front brakes 355 attached to the front forks 130 for braking the front drive wheel assemblies 110 and a second brake lever 360 may control either a front brake 355 or a rear brake 365 which is attached to the rear wheel assembly 120. In one embodiment, front brakes 355 are linear side pull or center pull brakes positioned on the front forks 130 to come into contact with each front rim 145 when activated by a front brake lever 350, 360. In another embodiment, the front brakes are hub brakes. In one embodiment, the rear brake 365 is a mechanical disc brake mounted to the hub of the rear wheel assembly 120. The vehicle 100 includes a parking brake, which may be a lockable detent pin (not shown) within a front brake lever 350, 360 for locking one or more wheels. In such embodiments, the parking brake retains the vehicle 100 in a stationary position during transfers, mounting or dismounting.

The activation mechanisms linking the first and second brake levers 350, 360 and the front brakes and rear brakes 355, 365, can include, for example, stainless steel cables with or without a lined housing, or hydraulic lines. Other braking systems suited to accommodate a rider's abilities and the vehicle application, including the full range of hand-activated braking mechanisms designed for bicycles and motorcycles in various combinations with the activation mechanisms are contemplated.

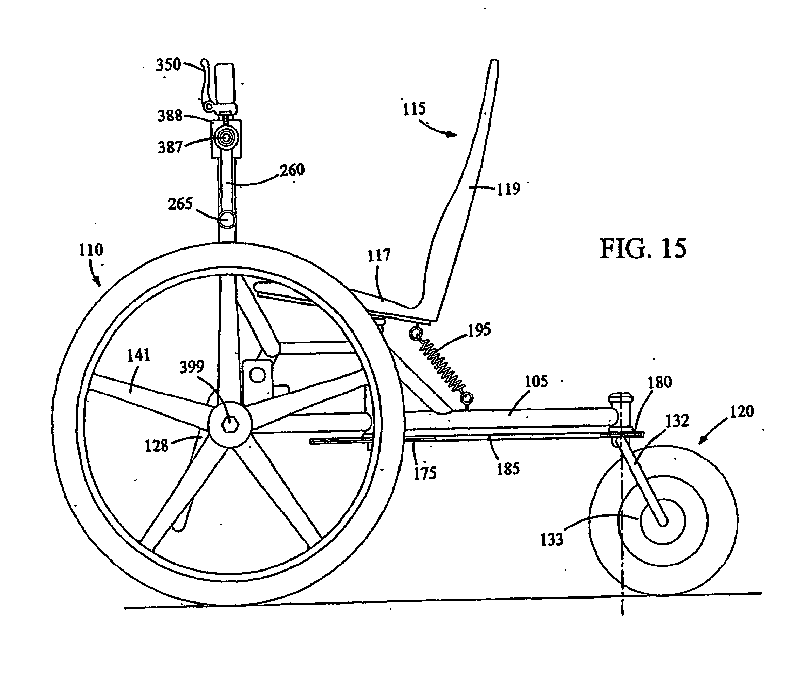

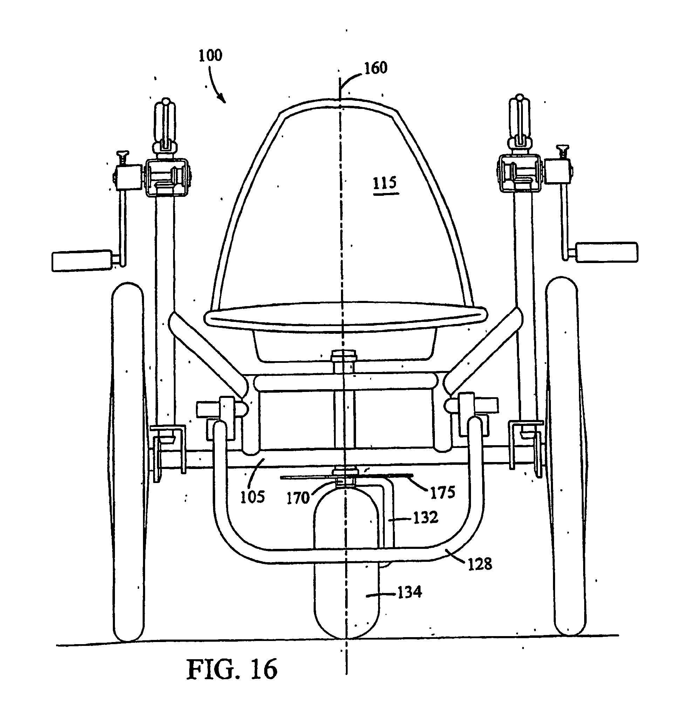

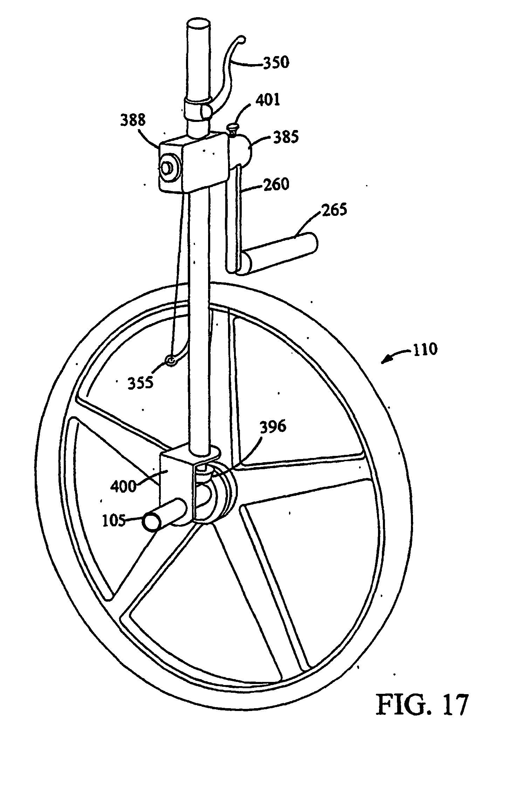

Referring now to FIGS. 14 through 18, in one embodiment, the vehicle 100 includes two independent hand-operable crank assemblies 250a and 250b, each operably connected to corresponding front drive wheel assemblies 110 for propulsion of the vehicle 100 in a forward and reverse direction.

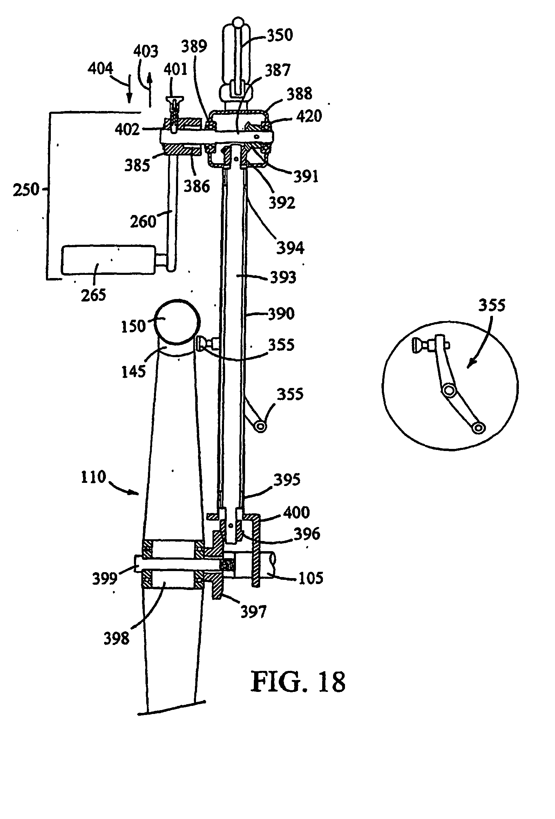

With specific reference to FIG 18, and in one embodiment, the crank handle 265 is rotatably attached to the crank arm 260 which is mounted to the crank arm housing 385. A roller clutch 386 is pressed into the crank arm housing 385. The crank arm housing 385 is attached to the crank drive shaft 387 for rotation. The crank drive shaft 387 is attached to the crank drive shaft housing 388 for rotation. The crank drive shaft 387 is supported by two bearings, an inboard bearing 420 and an outboard bearing 389 which are attached to the crank drive shaft housing 388.

The crank drive shaft housing 388 is attached to the upper end of the main drive shaft housing 390. Affixed to the crank drive shaft 387, in one embodiment, is a miter gear 391. This miter gear 391 engages a second miter gear 392 which is attached to the upper end of the main drive shaft 393. The main drive shaft 393 is housed within the main drive shaft housing 390. The main drive shaft 393 is held in place, for rotation, by an upper bearing 394 and a lower bearing 395, which are attached to the main drive shaft housing 390. The main drive shaft housing 390 is attached to the frame 105 by one or more mounting brackets 400.

Attached to the lower end of the main drive shaft 393 is a bevel gear 396. This bevel gear 396 is positioned in such a way as to engage a hub bevel gear 397 which is attached to the hub 398 of the front drive wheel assembly 110. The hub 398 is attached to a cantilevered axle 399 which is attached to the frame of the vehicle 105.

In one embodiment, there is a hand-retractable spring plunger 401 mounted on the crank arm housing 385. The hand-retractable spring plunger 401 can be positioned in either an engaged or a disengaged position. The hand-retractable spring plunger 401, when placed in the engaged position, slides into a detent hole 402 which is located on the crank drive shaft 387. The crank drive shaft 387 may have one or more detent holes 402. When placed in the disengaged position, the hand-retractable spring plunger 401 is fully retracted into the body of the crank arm housing 385, and no longer engages the detent hole 402 in the crank drive shaft 387. Referring further to figure 18, the arrow 403 indicates the direction for disengaging the hand- retractable spring plunger 401. The arrow 404 indicates the direction for engaging the hand-retractable spring plunger 401. The hand-retractable spring plunger 401 is held in place in the disengaged position by the rider rotating the hand-retractable spring plunger 401 90 degrees into a locked position.

In operation, the rider rotates the hand crank assembly 250 in a forward direction to propel the vehicle forward. This can be either a circular motion or a forward-and-back motion, both resulting in forward motion of the vehicle 100. This is accomplished when the hand-retractable spring plunger 401 is in the disengaged position. This position is referred to as "freewheeling" in bicycling terminology. In this position, in the case of traveling down a hill, the front drive wheel assemblies 110 rotate while the hand crank assemblies 250 remain stationary.

With the hand-retractable spring plunger 401 in the engaged position, the crank drive assembly 250 becomes a fixed drive. In this case, when the rider rotates the hand crank assembly 250 in a forward direction, the front wheel 110 rotates forward. When the rider rotates the hand crank assembly 250 in a reverse direction, the front drive wheel 110 rotates in a reverse direction. When the rider holds the hand cranks 250 stationary, the front wheels 110 will also remain stationary.

In operation, the hand crank arm 260 turns the crank drive shaft 387, which rotates the crankshaft miter gear 391 which rotates the upper drive shaft miter gear 392, which rotates the main drive shaft 393, which rotates the lower bevel gear 396 which rotates the hub bevel gear 397. This accomplishes the rotation of the front drive wheel assembly 110 in a forward or reverse direction.

Specifically, with the hand-retractable spring plunger 401 in the disengaged position, the forward motion of the hand crank arm 260 causes the roller clutch 386 to engage the crank drive shaft 387. When the hand crank arm 260 is rotated in a reverse direction or remains stationary while the vehicle 100 is in a forward motion, the roller clutch 386 will disengage the hand crank arm 260 from the crank drive shaft 387.

With the hand-retractable spring plunger 401 in the engaged position, the hand crank arm 260 is positively engaged with the crank drive shaft 387. In this instance, either forward or reverse rotation of the hand crank assembly 250 will result in a corresponding forward or reverse rotation of the front wheel assembly 110.

In another embodiment, the bevel gear 396 at the lower end of the main drive shaft 393 engages a modified coaster brake hub (not shown), such as the Sram internal gear hub with coaster brake which is a standard component within the bicycling industry.

In operation, the modified Sram hub allows the rider to pedal forward for forward motion, freewheel in forward motion, and pedal in reverse for reverse motion. In the case of this embodiment, the roller clutch 386 and the spring loaded plunger 401 are excluded.

In another embodiment, the inventors contemplate an adaptive feature which allows the rider to propel the vehicle using a lever-drive motion instead of a circular hand-crank motion. This would be accomplished by removing one or more of the crank handles 265 and replacing it with a specially fitted lever (not shown). This lever adaptation kit would include 2 adjustable stops which would determine the range of the lever's extension and retraction according to what is ideal for each individual (not shown).

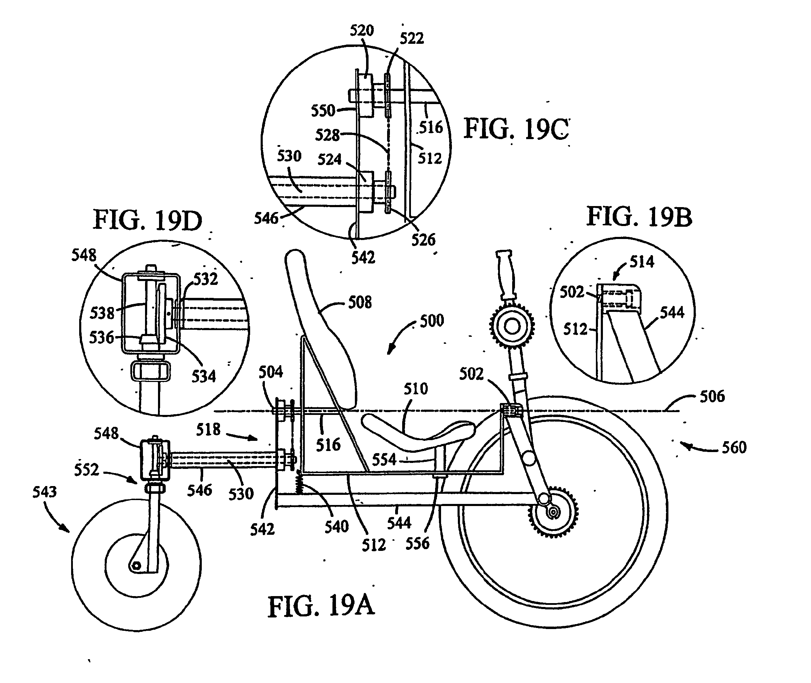

Referring now to Figures 19A through 19D, and in one embodiment, a seat steering assembly 500 is suspended on and rotates about a forward pivot attachment point 502 and a rear pivot attachment point 504 positioned about a horizontal pivot axis 506.

The seat steering assembly 500 includes a seat back 508, a seat base 510, a seat frame 512, and a steering shaft assembly 518. The seat steering assembly 500 can also include left and right neutral bias actuators 540. The steering shaft assembly 518 operably connects the seat frame 512 to a rear wheel assembly 552. The forward portion of the seat frame 512 is rotatably attached to the forward pivot attachment point 502 with a bolt and a bearing assembly 514 (Figure 19B). The rear portion of the seat frame 512 is affixed to the upper steering shaft 516. The rear portion of the upper steering shaft 516 is rotatably affixed to an upper flange bearing 520 at the rear pivot attachment point 504. The left and right neutral bias actuators 540 are disposed between the seat frame 512 on the first end and the vehicle frame 544 at a second end. When the seat assembly 500 is rotated for turning the vehicle 560, the actuator 540 is biased toward returning the seat assembly 500 and consequently the rear wheel assembly 552 toward a centered, straight-ahead position. The actuator 540 may be a pre-tensioned adjustable spring, an adjustable pressurized cylinder or other biasing device.

The steering shaft assembly 518 includes an upper steering shaft 516, an upper flange bearing 520 (Figure 19C), an upper drive sprocket 522, a lower flange bearing 524, a lower driven sprocket 526, a roller chain 528, a lower steering shaft 530, a rear shaft support bearing 532 (Figure 19D), a lower steering shaft bevel gear 534, a vertical steering shaft bevel gear 536 and a vertical steering shaft 535. In this embodiment, the steering shaft assembly 518 between the seat steering assembly 500 and rear wheel assembly 552 can permit more compact configurations of the vehicle 560. In one example, the shafts 516, 530 and gears 534, 536 are completely or substantially enclosed by housing components, thereby reducing the rider's exposure to moving parts and reducing maintenance requirements.

The upper steering shaft 516 is rotatably attached to the upper flange bearing 520. The upper flange bearing 520 is affixed to the vertical frame plate 542 of the frame 544. The upper drive sprocket 522 is affixed to the upper steering shaft 516 between the upper flange bearing 520 and the seat frame 512. The lower driven sprocket 526 is affixed to the forward portion of the lower steering shaft 530. The forward portion of the lower steering shaft 530 is rotatably attached to the lower flange bearing 524 which is affixed to the vertical frame plate 542. The rear portion of the lower steering shaft 530 is supported by the rear shaft support bearing 532 which is affixed to the frame extension tube 546. The lower steering shaft bevel gear 534 is affixed to the rear portion of the lower steering shaft 530. The vertical steering shaft bevel gear 536 is affixed to the vertical steering shaft 538 and positioned within the rear steering housing 548 to be actuated by the lower steering shaft bevel gear 534. Referring to Figure 19C, the upper drive sprocket 522 and the lower driven sprocket 526 are connected by a continuous loop of roller chain 528. The upper flange bearing 520 incorporates a chain tension adjuster (not shown) which allows for tension adjustment of the roller chain 528.

Referring now to Figures 19A and 19D, the vertical steering shaft 538 is affixed to the rear wheel assembly 552, such that the rotation of the vertical steering shaft 538 causes a corresponding rotation of the rear wheel assembly 552.

With continued reference to Figure 19A, the seat base 510 and the seat back 508 can be adjusted in both the vertical and horizontal planes in order to accommodate various riding conditions, and the varied needs and abilities of the rider. Specifically, the seat base 510 can be located on, above or below the horizontal pivot axis 506. To accomplish this, the seat base 510 is mounted upon an adjustable seat post 554 that is affixed to the seat frame 512 by a shaft collar clamp 556.

In one embodiment, the ratio between the degree of seat assembly rotation and the degree of rear wheel assembly rotation can be adjusted by varying the sizes of the upper drive sprocket 522 and the lower driven sprocket 526.

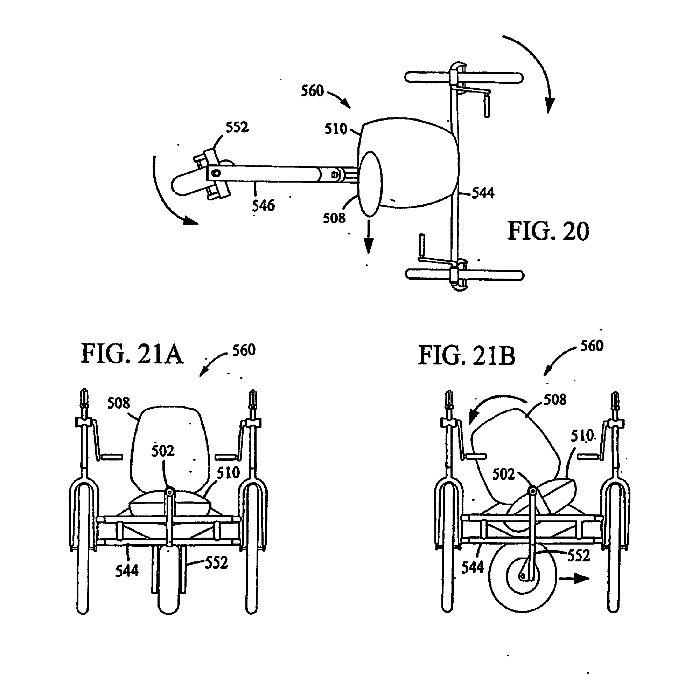

Referring now to Figures 20, 21A and 21B, in operation, the rider leans to rotate the seat assembly 500 in one direction, which causes the upper drive sprocket 522 to rotate in the same direction, which causes the roller chain 528 to rotate the lower driven sprocket 526 in the same direction, which causes the lower steering shaft 530 to rotate the lower steering shaft bevel gear 534 in the same direction, which causes the vertical steering shaft bevel gear 536 to rotate the rear wheel assembly 552 in the opposite direction, thereby turning the vehicle 560 in a direction corresponding to the direction of rotation of the seat back 508. The left and right neutral bias actuators 540 bias the seat assembly 500 toward a centered, straight-ahead position.

Referring specifically to Figure 20, rotating the seat back 508 toward the right results in a rotation of the rear wheel assembly 552 toward the left. This results in the vehicle 560 turning to the right when moving in a forward direction, corresponding to the direction of rotation of the seat back 508.

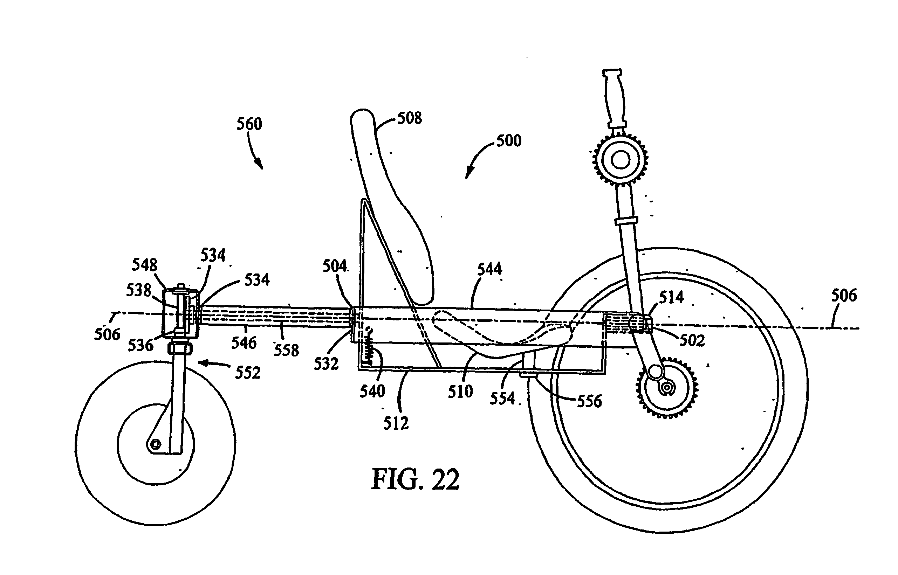

Referring now to Figure 22, in another embodiment, the seat assembly 500 is positioned in such a manner that there is a single steering shaft 558 operably connecting the seat frame 512 to the rear wheel assembly 552. The forward end of the steering shaft 558 is affixed to the rearward portion of the seat frame 512. The steering shaft bevel gear 534 is affixed to the rear portion of the steering shaft 558.

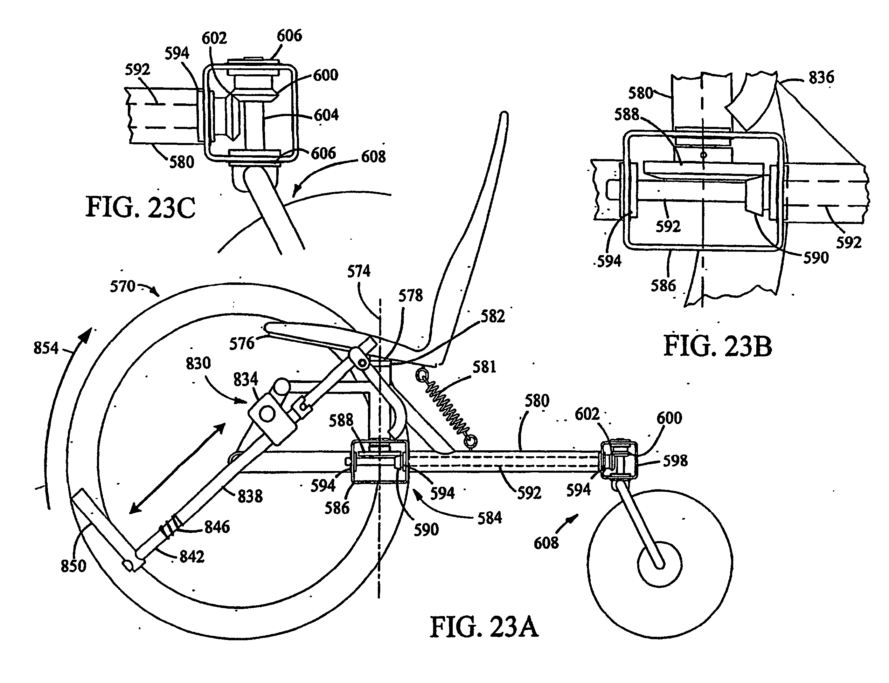

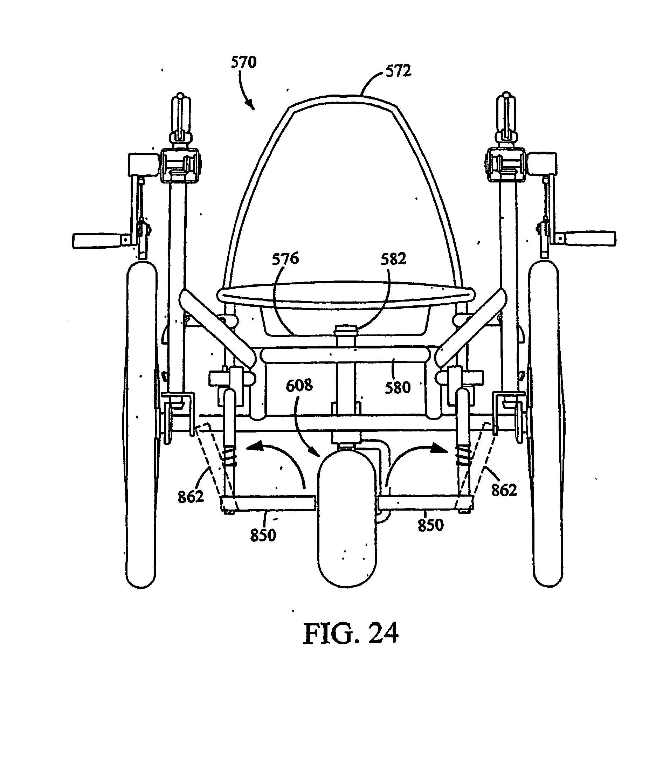

Referring now to Figures 23A, 23B, 23C and 24, and in one embodiment, steering of the vehicle 570 is accomplished by rotation of the seat 572 about a substantially vertical axis 574. The seat 572 is mounted to a platform 576 which is affixed to the upper end of the vertical steering shaft 578. The vertical steering shaft 578 is rotatably affixed to the frame 580 with a bearing assembly 582 to permit free rotation of the seat 572. One or more neutral bias actuators 581 are disposed between the seat platform 576 at the first end and the vehicle frame 580 at the second end. When the seat 572 is rotated for turning the vehicle 570, the actuator 581 is biased toward returning the seat 572 and consequently the rear wheel assembly 608 toward a centered, straight-ahead position. The actuator 581 may be a pre-tensioned adjustable spring, an adjustable pressurized cylinder or a similar biasing device.

In this embodiment, the steering shaft assembly 584 is comprised of the vertical steering shaft 578, vertical shaft bearings 582, a forward steering shaft housing 586, an upper bevel gear 588, a forward bevel gear 590, a horizontal steering shaft 592, horizontal shaft support bearings 594, a rear steering housing 598, a rear upper miter gear 600, a rear lower miter gear 602, a fork steerer shaft 604 and fork steerer shaft bearings 606.

In this embodiment, the upper bevel gear 588 is affixed to the lower end of the vertical steering shaft 578. The upper bevel gear 588 engages the forward bevel gear 590 which is affixed to a forward portion of the horizontal steering shaft 592. The horizontal steering shaft 592 is rotatably attached to the forward steering shaft housing 586 and the rear steering shaft housing 598 by the horizontal shaft support bearings 594 affixed to the forward housing 586 and the rear housing 598. The lower rear miter gear 602 is affixed to the rearward end of the horizontal steering shaft 592. The upper rear miter gear 600 is attached to the fork steerer shaft 604 and engages the rear lower miter gear 602. The fork steerer shaft 604 is rotatably attached to the rear housing 598 by bearing assemblies 606 affixed to the upper and lower portions of the rear housing 598.

In operation, the rotation of the seat 572 causes a corresponding rotation of the vertical steering shaft 578, which rotates the upper bevel gear 588, and leads to a corresponding rotation of the forward bevel gear 590 and the horizontal steering shaft 592. The rotation of the steering shaft 592 causes a corresponding rotation of the rear lower miter gear 602, which leads to a corresponding rotation of the rear upper miter gear 600 and the fork steerer shaft 604, which causes a corresponding rotation of the rear wheel assembly 608.

In this example, rotating the seat 572 in one direction causes the rear wheel assembly 608 to rotate in an opposite direction, resulting in the vehicle 570 turning in the direction of the seat rotation. If the seat 572 is rotated to the left, the rear wheel assembly 608 rotates to the right, thereby steering the vehicle 570 to the left in a forward direction.

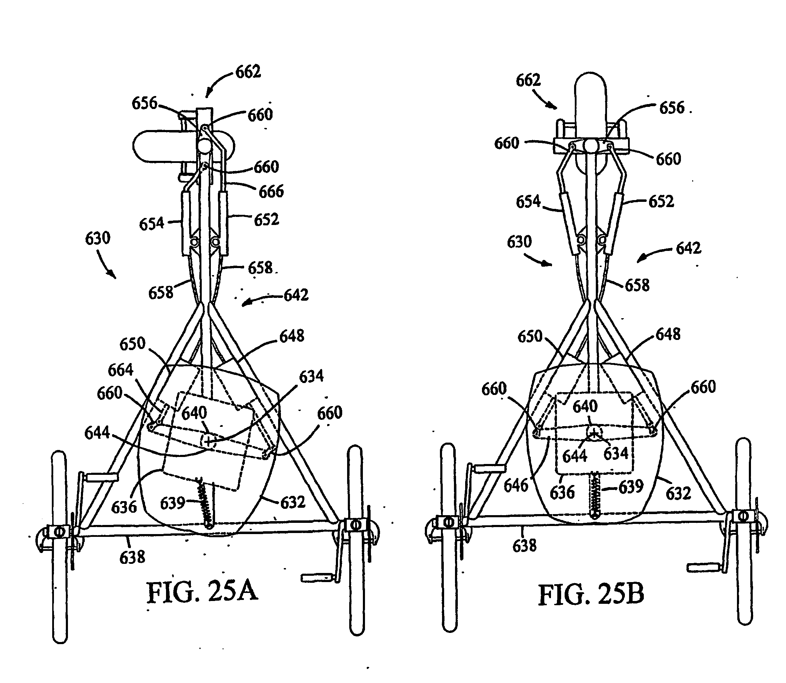

Referring now to Figures 25A and 25B, and in one embodiment, steering of the vehicle 630 is accomplished by rotation of the seat 632 about a substantially vertical axis 634. The seat 632 is mounted to a platform 636 which is affixed to the upper end of the vertical steering shaft 644. The vertical steering shaft 644 is rotatably attached to the frame 638 with a bearing assembly 640 to permit free rotation of the seat 632. One or more neutral bias actuators 639 are disposed between the seat platform 636 at the first end and the vehicle frame 638 at the second end. When the seat 632 is rotated for turning the vehicle 630, the actuator 639 is biased toward returning the seat 632 and consequently the rear wheel assembly 662 toward a centered, straight-ahead position. The actuator 639 may be a pre-tensioned adjustable spring, an adjustable pressurized cylinder or a similar biasing device.

In this embodiment, the hydraulic steering assembly 642 consists of the vertical steering shaft 644, a forward bellcrank 646, a left master cylinder 648, a right master cylinder 650, a left slave cylinder 652, a right slave cylinder 654, a rear bellcrank 656, a hydraulic line 658 connecting the left master cylinder 648 to the right slave cylinder 654, a hydraulic line 658 connecting the right master cylinder 650 to the left slave cylinder 652 and four tie rod ends 660, one of which is connected to each of the four hydraulic cylinders.

In this embodiment, the forward bell crank 646 is affixed to the lower end of the vertical steering shaft 644. The left master cylinder 648 is connected to the left arm of the forward bellcrank 646 by a tie rod end 660. The right master cylinder 650 is connected to the right arm of the forward bellcrank 646 by a tie rod end 660. The left and right master cylinders 648,650 are affixed to the frame 638. The left master cylinder 648 is connected to the right slave cylinder 654 by a hydraulic line 658. The right master cylinder 650 is connected to the left slave cylinder 652 by a hydraulic line 658. The left slave cylinder 652 is connected to the left arm of the rear bellcrank 656 by a tie rod end 660. The right slave cylinder 654 is connected to the right arm of the rear bellcrank 656 by a tie rod end 660. The slave cylinders 652,654 are rotatably affixed to the frame 638. The rear bellcrank 656 is affixed to the rear wheel assembly 662.

In operation, the rotation of the seat 632 causes a corresponding rotation of the vertical steering shaft 644, which causes a corresponding rotation of the forward bellcrank 646, which causes a corresponding retraction of the piston 664 in one master cylinder 650, which causes the connected slave cylinder rod 666 to extend, which causes a corresponding rotation of the rear bellcrank 656, which causes a corresponding rotation of the rear wheel assembly 662. Each slave cylinder 652,654 is rotatably affixed to the frame 638, allowing the slave cylinder 652,654 to rotate for proper alignment relative to the position of the rear bellcrank 656 through its degrees of rotation.

In this example, rotating the seat 632 in one direction causes the rear wheel assembly 662 to rotate in an opposite direction, resulting in the vehicle 630 turning in the direction of the seat rotation. If the seat 632 is rotated to the right, the rear wheel assembly 662 rotates to the left, thereby steering the vehicle 630 to the right in a forward direction.

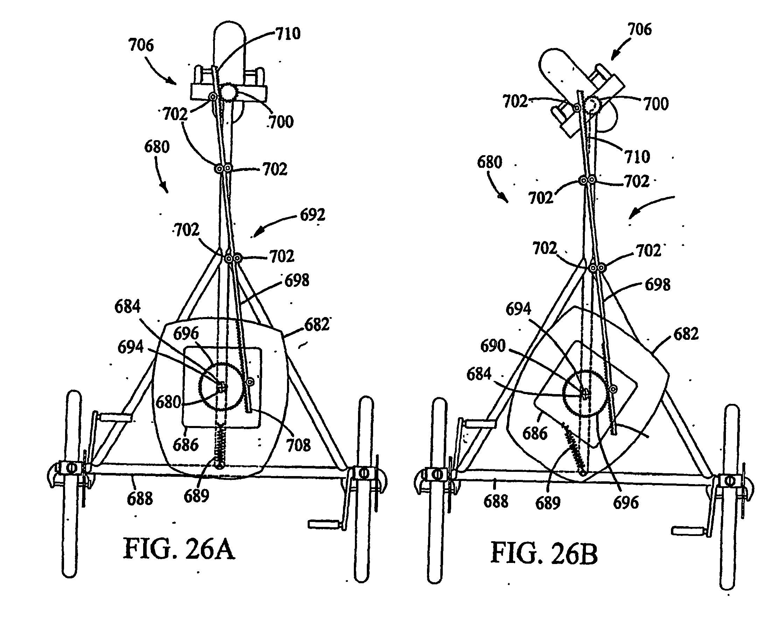

Referring now to Figures 26A and 26B, and in one embodiment, steering of the vehicle 680 is accomplished by rotation of the seat 682 about a substantially vertical axis 684. The seat 682 is mounted to a platform 686 which is affixed to the upper end of the vertical steering shaft 694. The vertical steering shaft 694 is rotatably affixed to the frame 688 with a bearing assembly 690 to permit free rotation of the seat 682. One or more neutral bias actuators 689 are disposed between the seat platform 686 at the first end and the vehicle frame 688 at the second end. When the seat 682 is rotated for turning the vehicle 680, the actuator 689 is biased toward returning the seat 682 and consequently the rear wheel assembly 706 toward a centered, straight-ahead position. The actuator 689 may be a pre-tensioned adjustable spring, an adjustable pressurized cylinder or a similar biasing device.

In this embodiment, the rack and pinion steering assembly 692 consists of a vertical steering shaft 694, a forward pinion gear 696, a gear rack 698, a rear pinion gear 700 and multiple guide bushings 702.

In this embodiment, the forward pinion gear 696 is affixed to the lower end of the vertical steering shaft 694. The forward end of the gear rack 698 engages the forward pinion gear 696. The rear end of the gear rack 698 engages the rear pinion gear 700. The rear pinion gear 700 is affixed to the rear wheel assembly 706. The multiple guide bushings 702 are rotatably affixed to the frame 688 and positioned near the forward, middle and rearward portions of the gear rack 698.

In one embodiment, the forward portion of the gear rack 698 has teeth 708 located on the right side of the gear rack 698 for positive engagement of the forward pinion gear 696. The rear portion of the gear rack 698 has teeth 710 located on the left side of the gear rack 698 for positive engagement of the rear pinion gear 700. The guide bushings 702 are rotatably mounted to the frame 688 and positioned in contact with the gear rack 698 to effectively support and align the gear rack 698 in relation to the forward and rear pinion gears 696,700 for positive engagement. The guide bushings 702 provide horizontal and vertical alignment and support of the gear rack 698.

In operation, the rotation of the seat 682 causes a corresponding rotation of the vertical steering shaft 694, which causes a corresponding rotation of the forward pinion gear 696, which causes a corresponding linear movement of the gear rack 698, which causes a corresponding rotation of the rear pinion gear 700, which causes a corresponding rotation of the rear wheel assembly 706.

Referring now to Figure 26A, rotating the seat 682 in one direction causes the rear wheel assembly 706 to rotate in an opposite direction, resulting in the vehicle 680 turning in the direction of the seat rotation. If the seat 682 is rotated to the right, the rear wheel assembly 706 rotates to the left, thereby steering the vehicle 680 to the right in a forward direction.

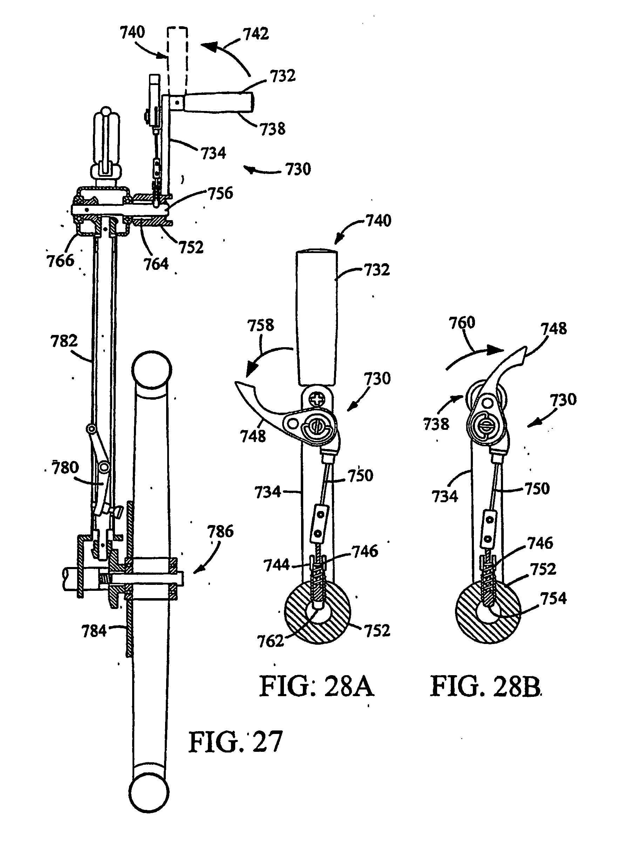

Referring now to Figures 27, 28A and 28B in one embodiment, the dual drive crank arm assembly 730 is comprised of a revolving folding handle 732, a crank arm 734, a crank arm housing 752, a crank drive shaft 756, a crank drive shaft detent hole 762, a roller clutch 764, a retractable spring plunger 746, a lever 748 and a flexible cable 750.

The revolving folding handle 732 is affixed to the crank arm 734 which is affixed to the crank arm housing 752. The roller clutch 764 is affixed to the crank arm housing 752 in a forward engaged position. The roller clutch 764 is rotatably affixed about the crank drive shaft 756. The crank drive shaft 756 is rotatably affixed to the crank drive shaft housing 766. The crank shaft detent hole 762 is located outboard of the roller clutch 764 and in alignment with the retractable spring plunger 746. The retractable spring plunger 746 is positioned within the crank arm housing 752 to permit engagement of the plunger 746 with the crank drive shaft detent hole 762.The lever 748 is rotatably affixed to the crank arm 734 and connected to the retractable spring plunger 746 by a flexible cable 750.

The default position of the handle 738 is a horizontal position for a rotational operation of the crank arm assembly 730. The alternate position of the handle 740 is a vertical position for a reciprocating lever operation of the crank arm assembly 730. This is accomplished by the rider pulling outward and upward on the handle 732, which disengages it from the locked horizontal position and re-engages it in a locked vertical position.

In operation, there are three modes of propulsion. In the first mode, with the handle 732 in the horizontal position 738 and the spring plunger 746 in the retracted position 744, forward rotation of the crank arm 734 will result in forward propulsion of the vehicle. In this mode, there is a freewheel function which permits the crank arm 734 to remain stationary while the vehicle is moving forward. In the second mode, with the handle 732 in the horizontal position 738 and the spring plunger 746 in the engaged position 754, forward rotation of the crank handle 732 will result in forward propulsion of the vehicle. Reverse rotation of the crank handle 732 will result in reverse propulsion of the vehicle. This is referred to as a fixed drive mode.

In the third mode, with the handle 732 in the vertical position 740 and the spring plunger 746 in the retracted position 744, a forward motion of the handle 732 will result in forward propulsion. A rearward motion of the handle 732 will disengage the roller clutch 764 from the crank drive shaft 756, allowing the rider to reposition the handle 732 for the next forward propulsion stroke. This is referred to as reciprocating lever drive propulsion.

In this example, the vehicle may be operated in a narrow hallway or doorway by reducing the overall width of the vehicle. There is also the increased mechanical advantage provided by the extended length of the crank arm and vertical handle combination.

The retractable spring plunger 746 is actuated by a rotating lever arm 748 connected to the spring plunger 746 by a flexible cable 750. The spring plunger 746 is disengaged from the crank drive shaft 756 by rotating the lever 748 in a direction which retracts the cable 750 and consequently, the spring plunger 746. To re-engage the spring plunger 746, the lever 748 is moved in the opposite direction.

In a further embodiment, the roller clutch 764 is replaced by a bi-directional ratchet drive (not shown) affixed to the crank arm housing 752. In this example, the operator may propel the vehicle in a fourth mode, in addition to the three modes noted above. The fourth mode is reverse reciprocal lever drive.

Referring now to Figure 27, and in one embodiment, the front brakes 780 are linear side pull brakes which are positioned on a forward portion of the frame 782 to come into contact with the brake disc 784 which is affixed to the front wheel assembly 786.

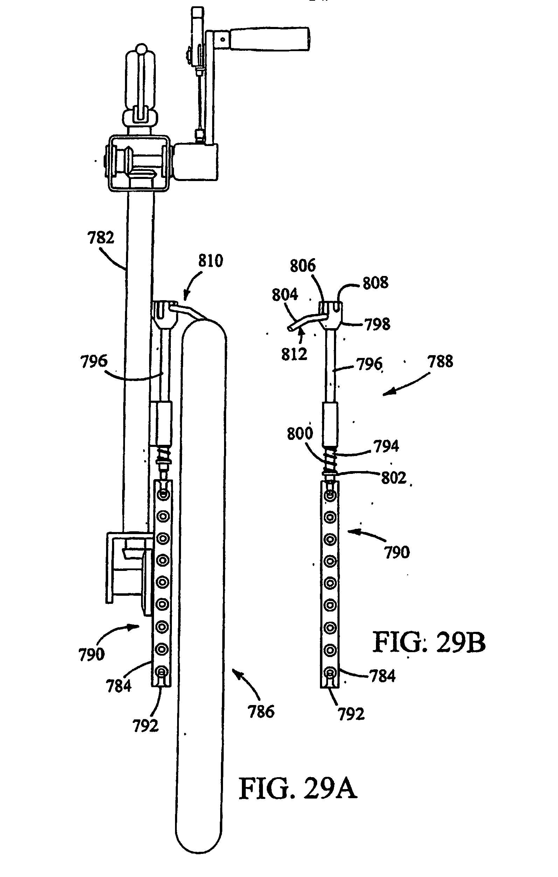

Referring now to Figures 29A and 29B in one embodiment, there is a locking brake assembly 788 which consists of a brake disc 784 having a series of countersunk holes 790 which are located on the circumferential edge of the disc 792, a brake engagement rod 794, an engagement rod housing 796, a registration collar 798, a compression spring 800, a spring stop 802 and an engagement rod handle 804.

In one embodiment the brake disc 784 is affixed to the front wheel assembly 786, the engagement rod housing 796 is affixed to the vehicle frame 782, the registration collar 798 is affixed to the engagement rod housing 796, the engagement rod 794 is rotatably positioned within the engagement rod housing 796, the compression spring 800 is located between the lower portion of the engagement rod housing 796 and the spring stop 802, the spring stop 802 is located on the lower portion of the engagement rod 794. The handle 804 is located at the upper end of the engagement rod 794. The registration collar 798 has two vertical slots. The engagement slot 806 is approximately 3/8 inch deeper than the disengagement slot 808. The holes 790 located on the circumferential edge of the brake disc 792 are countersunk and spaced equidistant from one another.

In operation, the engagement rod handle 804 is positioned in the disengagement slot 808 for operating the vehicle with the locking brake assembly 788 in the disengaged position 810. In this example, the handle 804 is lifted and rotated which results in a corresponding lift and rotation of the engagement rod 794 which causes the lower end of the engagement rod 794 to become disengaged from the brake disc 784. The handle 804 is then released into the disengagement slot 808 which causes the engagement rod 794 to remain fixed in the disengaged position 810. The compression spring 800 provides a constant tension which secures the engagement rod 794 in the disengagement slot 808.

In a second example, the engagement rod handle 804 is positioned in the engagement slot 806 for engaging the locking brake assembly 788. In this example, the handle 804 is lifted and rotated which results in a corresponding lift and rotation of the engagement rod 794. The handle 804 is then released into the engagement slot 806 which causes the lower end of the engagement rod 794 to positively engage the brake disc 784 by descending into one of the holes 790 located on the circumferential edge of the brake disc 792. This results in the brake disc 784 and the wheel assembly 786 being in a locked position. The compression spring 800 provides a constant tension which secures the engagement rod 794 in the registration collar engagement slot 806. The countersunk holes 790 facilitate a positive engagement of the brake disc 784 and the engagement rod 794.

In one embodiment each of the two front drive wheels is equipped with a locking brake assembly 788.

Referring now to Figures 23A, 24 and 30, and in one embodiment, there is at least one footrest assembly 830 which is affixed to a forward portion of the frame 832 for support of the rider's lower limbs. The footrest assembly 830 consists of a mounting bracket 834, a quick-release clamp 864, an actuating handle 836, an external tube 838, an upper registration collar 840, an upper registration pin 844, a lower registration collar 866, a lower registration pin 868, a lower registration pin hole 870, an internal tube 842, a compression spring 846, a lower spring stop 848 and a footrest 850.

The mounting bracket 834 consists of two clamps, the first of which is affixed to a forward portion of the frame 832. The second clamp secures and positions the external tube 838. The upper registration collar 840 is affixed to the upper portion of the external tube 838. The internal tube 842 is located within the external tube 838, extending in length beyond the upper and lower end of the external tube 838. The actuating handle 836 is affixed to the upper end of the internal tube 842. The upper registration pin 844 is affixed to the side of the internal tube 842. The compression spring 846 is located about the lower end of the internal tube 842, between the lower portion of the external tube 838 and the lower spring stop 848. The lower spring stop 848 is affixed to the lower portion of the internal tube 842. The footrest 850 is affixed to the lower end of the internal tube 842.

The mounting bracket 834 allows the footrest assembly 830 to be adjusted according to the individual needs of the operator. The footrest assembly 830 can be rotated for vertical height adjustment 852 of the footrest 850 (Figure 23A). The external tube 838 can be rotated within the mounting bracket 834 in order to position the footrest 850 either above, below or on a horizontal plane 860 (Figure 24). The external tube 838 can be extended or retracted within the mounting bracket 834 to adjust the forward position of the footrest 850 (Figure 23A).

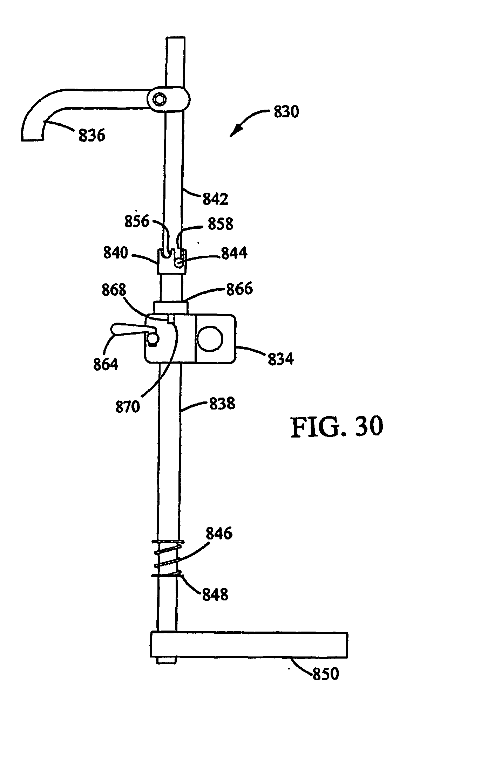

The upper registration collar 840 includes two vertical slots (Figure 30).The upper registration pin 844 is positioned in the engaged registration slot 856 to locate the internal tube 842 and therefore the footrest 850 in a position for supporting the foot of the operator. The upper registration pin 844 is positioned in the disengaged registration slot 858 to locate the internal tube 842 and therefore the footrest 850 in a retracted position 862 for mounting and dismounting the vehicle 570. In one embodiment, the registration slots are positioned on the upper registration collar 840 to allow for a 110 degree rotation of the footrest 850.

In operation, the actuating handle 836 is pulled rearward and rotated to engage the upper registration pin 844 in a slot on the upper registration collar 840. The handle rotation causes the internal tube 842 to rotate in a corresponding direction, which causes the footrest 850 to rotate in the same direction.

The compression spring 846 provides a constant tension on the internal tube 842 to secure the upper registration pin 844 in a slot on the upper registration collar 840.

In one embodiment, the mounting bracket 834 of the footrest assembly 830 includes a cam-actuated quick-release clamp 864 which enables the external tube 838 to be quickly retracted or extended (Figure 30). In this example, a lower registration collar 866 is mounted to the external tube 838. In the default position the lower registration pin 868 of the lower registration collar 866 is inserted into the lower registration pin hole 870 in the mounting bracket 834.

In operation, the lever of the quick release clamp 864 is rotated to release the clamping action on the external tube 838, which causes the external tube 838 to move freely. This enables the external tube 838 to be extended or retracted. When the lower registration collar pin 868 is inserted into the lower registration pin hole 870 on the mounting bracket 834, the external tube 838 is returned to a preset position.

In one embodiment, there is a right and left footrest assembly, each of which is affixed to a forward portion of the frame for support of the rider's lower limbs. Each footrest assembly is independently adjustable and independently removable.

A number of embodiments have been described. Nevertheless, it will be understood that various modifications may be made without departing from the scope of the invention. Accordingly, other embodiments are within the scope of the following claims. For example, for rehabilitative applications, the vehicle can include a foot pedal assembly (not shown) configured as in a conventional bicycle foot crank mechanism to which the rider's feet can be positioned. In one embodiment, at least one of the hand crank sprockets 255 and the foot pedal assembly are operably connected by a direct drive arrangement. In this configuration, the drive chain 275 attached to the crank sprockets 255 provides propulsion of the vehicle 100 and simultaneously rotates the foot pedals, allowing improved circulation to and neuro-stimulation of the lower limbs.

The foregoing embodiments are therefore to be considered in all respects illustrative rather than limiting of the invention described herein. The scope of the invention is thus indicated by the appended claims rather than by the foregoing description, and all changes which come within the meaning and range of equivalency of the claims are therefore intended to be embraced herein.

## Claims

1. A human-powered vehicle (100, 560, 630) comprising:
a structural frame (105, 544, 580, 638);
two front wheels (110) mounted to fixed axles at a forward portion of the frame (105) for rotation;
a seat (115, 572, 632, 682) secured to the frame, the seat positioned between the front wheels (110); and
a steerable rear wheel (120) mounted to the frame (105, 544, 580, 638) behind the seat (115) and defining a rear wheel kingpin axis,
wherein at least one of the two front wheels is operably connected to a hand-operable crank (250) for propulsion of the vehicle
**characterized in that**
the seat (115, 572, 632, 682) being adapted to pivot about a seat pivot axis and being operably connected to the rear wheel (120) such that pivoting of the seat (115) about the seat pivot axis causes pivoting the rear wheel (120) about the kingpin axis to effect steering of the vehicle (100).

2. The vehicle of claim 1 wherein the seat pivot axis is substantially vertical.

3. The vehicle of claim 1 wherein the seat (115, 572, 632, 682) is operably linked to the steerable rear wheel (120) by a substantially horizontal steering shaft (592).

4. The vehicle of claim 1 wherein the seat pivot axis is declined toward the front wheels (110) to define a declination angle, wherein the declination angle is between about 25 and 75 degrees.

5. The vehicle of any of the above claims further comprising two independent hand-operable cranks (250), each crank operably connected to a corresponding front wheel (110).

6. The vehicle of any of the above claims further comprising at least one reverse drive (300) for rearward propulsion of the vehicle (100).

7. The vehicle of claim 1 wherein the seat pivot axis is substantially horizontal.

8. The vehicle of claim 7 further comprising a seat steering assembly (500) configured for rotatable attachment about the seat pivot axis, the seat steering assembly further comprising a seat frame (512) attached thereto, for supporting the seat (115).

9. The vehicle of claim 8 further comprising neutral bias actuators (540) extending between the seat frame (512) at a first end and the structural frame (544) at a second end.

10. The vehicle of claim 8 wherein a steering shaft assembly (518) operably connects the seat steering assembly to the rear wheel assembly (552).

11. The vehicle of claim 8 wherein the steering shaft assembly (518) further comprises an upper steering shaft (516) and a lower steering shaft (530), the upper steering shaft (516) being coupled to the seat steering assembly (500) at a first end and coupled to the lower steering shaft (530) at a second end, the lower steering shaft (530) being coupled to the upper steering shaft (516) at a first end and coupled to the rear wheel assembly (552) at a second end.

12. The vehicle of claim 5 wherein the hand-operable cranks (250) comprise crank sprockets (255) and the front wheels (110) include wheel sprockets (270), the crank sprockets (255) being coupled to the wheel sprockets (270) by means for positive engagement.

13. The vehicle of claims 2, 4 and 7 wherein the seat (115) is operably connected to the rear wheel (120) by a flexible chain, roller chain, cable or nylon belt (185,215).

14. The vehicle of claim 4 wherein a chain (215) is trained around a driven sprocket (180) secured to the rear wheel steering assembly (120), the chain (215) adjustably attached to first and second portions of the seat (115) by first and second cables (220), the chain (215) being crossed between the driven sprocket (180) and the first and second portions of the seat (115).

15. The vehicle of claim 13 wherein a chain (185) is trained about a drive sprocket (175) secured to the seat (115) and a driven sprocket (180) secured to the rear wheel steering assembly (120), the chain being crossed between the drive and the driven sprockets.

16. The vehicle of claim 15 wherein the drive sprocket (175) is disposed on a seat support shaft allowing alignment of the rear wheel relative to the seat position.

17. The vehicle of any of the above claims wherein the front wheels (110) are each mounted for rotation about a cantilevered axle secured to the frame (105).

18. The vehicle of any of the above claims wherein the vehicle is configured to permit an operator having the use of only one hand to both steer and propel the vehicle.

19. The vehicle of claim 1 further comprising at least one hand-operable crank disposed above the front wheels and operably connected thereto for propulsion of the vehicle.

## Patentansprüche

1. Mit Menschenkraft angetriebenes Fahrzeug (100, 560, 630), umfassend:
einen Baurahmen bzw. ein Befestigungsgestell (105, 544, 580, 638);
zwei Vorderräder (110), die zum Drehen an feste Achsen an einem vorderen Abschnitt des Rahmens (105) montiert sind;
einen an dem Rahmen befestigten Sitz (115, 572, 632, 682), wobei der Sitz zwischen den Vorderrädern (110) positioniert ist; und
ein lenkbares Hinterrad (120), das hinter dem Sitz (115) an den Rahmen (105, 544, 580, 638) montiert ist und eine Achse des Hinterrad-Achsenschenkelbolzens definiert,
wobei zumindest eines der zwei Vorderräder betriebsfähig mit einer handbetreibbaren Kurbel (250) für den Antrieb des Fahrzeugs verbunden ist,
**dadurch gekennzeichnet, dass**
der Sitz (115, 572, 632, 682) geeignet ist, sich um eine Sitzdrehachse bzw. - schwenkachse zu drehen bzw. zu schwenken und betriebsfähig mit dem Hinterrad (120) verbunden ist, so dass das Drehen bzw. Schwenken des Sitzes (115) um die Sitzdrehachse bewirkt, dass das Hinterrad (120) sich um die Achse des Achsenschenkelbolzens dreht bzw. schwenkt, um das Lenken des Fahrzeugs (100) zu bewirken.

2. Fahrzeug nach Anspruch 1, wobei die Sitzdrehachse im Wesentlichen vertikal ist.

3. Fahrzeug nach Anspruch 1, wobei der Sitz (115, 572, 632, 682) durch eine im Wesentlichen horizontale Lenkwelle (592) betriebsfähig mit dem lenkbaren Hinterrad (120) gekoppelt bzw. verbunden ist.

4. Fahrzeug nach Anspruch 1, wobei die Sitzdrehachse in Richtung der Vorderräder (110) abfällt bzw. geneigt ist, um einen Neigungswinkel zu definieren, wobei der Neigungswinkel zwischen etwa 25 und 75 Grad liegt.

5. Fahrzeug nach einem der vorhergehenden Ansprüche, das ferner zwei unabhängige handbetreibbare Kurbeln (250) umfasst, wobei jede Kurbel betriebsfähig mit einem entsprechenden Vorderrad (110) verbunden ist.

6. Fahrzeug nach einem der vorhergehenden Ansprüche, das ferner zumindest einen Rückwärtsantrieb bzw. ein Getriebe (300) für den Rückwärtsantrieb des Fahrzeugs (100) umfasst.

7. Fahrzeug nach Anspruch 1, wobei die Sitzdrehachse im Wesentlichen horizontal ist.

8. Fahrzeug nach Anspruch 7, das ferner eine Sitzlenkanordnung (500) umfasst, die für eine drehbare Befestigung um die Sitzdrehachse konfiguriert ist, wobei die Sitzlenkanordnung ferner einen daran befestigten Sitzrahmen (512) zum Halten des Sitzes (115) umfasst.

9. Fahrzeug nach Anspruch 8, das ferner Leerlaufausrichtungs- bzw. Neutral-Vorspannaktuatoren (540) umfasst, die sich zwischen dem Sitzrahmen (512) an einem ersten Ende und dem Baurahmen (544) an einem zweiten Ende erstrecken.

10. Fahrzeug nach Anspruch 8, wobei eine Lenkwellenanordnung (518) die Sitzlenkanordnung betriebsfähig mit der Hinterradanordnung (552) verbindet.

11. Fahrzeug nach Anspruch 8, wobei die Lenkwellenanordnung (518) ferner eine obere Lenkwelle (516) und eine untere Lenkwelle (530) umfasst, wobei die obere Lenkwelle (516) an einem ersten Ende mit der Sitzlenkanordnung (500) gekoppelt ist und an einem zweiten Ende mit der unteren Lenkwelle (530) gekoppelt ist, wobei die untere Lenkwelle (530) an einem ersten Ende mit der oberen Lenkwelle (516) gekoppelt ist und an einem zweiten Ende mit der Hinterradanordnung (552) gekoppelt ist.

12. Fahrzeug nach Anspruch 5, wobei die handbetreibbaren Kurbeln (250) Kurbelkettenräder (255) umfassen, und die Vorderräder (110) Radkettenräder (270) umfassen, wobei die Kurbelkettenräder (255) durch Einrichtungen für ein sicheres bzw. zwangsschlüssiges Eingreifen mit den Radkettenrädern (270) gekoppelt sind.

13. Fahrzeug nach den Ansprüchen 2, 4 und 7, wobei der Sitz (115) durch eine flexible Kette, eine Rollenkette, ein Seilzug oder einen Nylonriemen (185, 215) betriebsfähig mit dem Hinterrad (120) verbunden ist.

14. Fahrzeug nach Anspruch 4, wobei eine Kette (215) um ein an der Hinterradlenkanordnung (120) befestigtes angetriebenes Kettenrad (180) gezogen ist, wobei die Kette (215) durch erste und zweite Kabel (220) einstellbar an den ersten und zweiten Abschnitten des Sitzes (115) angebracht ist, wobei die Kette (215) zwischen dem angetriebenen Kettenrad (180) und den ersten und zweiten Abschnitten des Sitzes (115) gekreuzt ist.

15. Fahrzeug nach Anspruch 13, wobei eine Kette (185) um ein an dem Sitz (115) befestigtes Antriebskettenrad (175) und ein an der Hinterradlenkanordnung (120) befestigtes angetriebenes Kettenrad (180) gezogen ist, wobei die Kette zwischen den Antriebs- und den angetriebenen Kettenrädern gekreuzt ist.

16. Fahrzeug nach Anspruch 15, wobei das Antriebskettenrad (175) auf einem Sitzträgerschaft angeordnet ist, der die Ausrichtung des Hinterrads relativ zu der Sitzposition erlaubt.

17. Fahrzeug nach einem der obigen Ansprüche, wobei die Vorderräder (110) jeweils für die Drehung um eine an dem Rahmen (105) montierte Cantilever-Achse bzw. ausladende Achse montiert sind.

18. Fahrzeug nach einem der vorstehenden Ansprüche, wobei das Fahrzeug derart aufgebaut ist, dass es einem Bediener unter Verwendung von nur einer Hand erlaubt, das Fahrzeug sowohl zu lenken als auch anzutreiben.

19. Fahrzeug nach Anspruch 1, das ferner zumindest eine handbetreibbare Kurbel umfasst, die über den Vorderrädern angeordnet ist und für den Antrieb des Fahrzeugs betriebsfähig damit verbunden ist.

## Revendications

1. Véhicule (100, 560, 630) actionné par une personne, comprenant :
un cadre structurel (105, 544, 580, 638) ; deux roues avant (110) montées en rotation sur des essieux stationnaires sur une partie avant du cadre (105) :
un siège (115, 572, 632, 682) fixé sur le cadre, le siège étant positionné entre les roues avant (110) ; et
une roue arrière dirigeable (120) montée sur le cadre (105, 544, 580, 638) derrière le siège (115) et définissant un axe de pivot d'essieu de roue arrière,
dans lequel au moins une des deux roues avant est reliée dans un état prêt à la mise en service à une manivelle (250) pouvant être actionnée à la main pour la propulsion du véhicule,
**caractérisé en ce que**
le siège (115, 572, 632, 682) qui est adapté pour pivoter autour d'un axe du pivot de siège et qui est relié dans un état prêt à la mise en service à la roue arrière (120) de telle sorte que le pivotement du siège (115) autour de l'axe du pivot de siège provoque un pivotement de la roue arrière (120) autour de l'axe de pivot d'essieu pour effectuer la direction du véhicule (100).

2. Véhicule selon la revendication 1, dans lequel l'axe du pivot de siège est sensiblement vertical.

3. Véhicule selon la revendication 1, dans lequel le siège (115, 572, 632, 682) est relié dans un état prêt à la mise en service à la roue arrière (120) par un arbre de direction sensiblement horizontal (592).

4. Véhicule selon la revendication 1, dans lequel l'axe du pivot de siège est incliné vers les roues avant (110) afin de définir un angle d'inclinaison et dans lequel l'angle d'inclinaison est compris entre environ 25 et 75 degrés.

5. Véhicule selon l'une quelconque des revendications ci-dessus, comprenant en outre deux manivelles (250) indépendantes et pouvant être actionnées à la main, chaque manivelle étant reliée dans un état prêt à la mise en service à une roue avant correspondante (110).

6. Véhicule selon l'une quelconque des revendications ci-dessus, comprenant en outre au moins une commande de renversement de marche (300) pour la propulsion vers l'arrière du véhicule (100).

7. Véhicule selon la revendication 1, dans lequel l'axe du pivot de siège est sensiblement horizontal.

8. Véhicule selon la revendication 7, comprenant en outre un assemblage de direction du siège (500) configuré pour la fixation en rotation autour de l'axe du pivot de siège, l'assemblage de direction du siège comprenant en outre un cadre de siège (512) fixé sur celui-ci afin de soutenir le siège (115).

9. Véhicule selon la revendication 8, comprenant en outre des actionneurs de précontrainte neutres (540) s'étendant entre le cadre de siège (512) sur une première extrémité et le cadre structurel (544) sur une seconde extrémité.

10. Véhicule selon la revendication 8, dans lequel un assemblage d'arbre de direction (518) relie dans un état prêt à la mise en service l'assemblage de direction du siège à l'assemblage de roue arrière (552).

11. Véhicule selon la revendication 8, dans lequel l'assemblage d'arbre de direction (518) comprend en outre un arbre de direction supérieur (516) et un arbre de direction inférieur (530), l'arbre de direction supérieur (516) étant accouplé à l'assemblage de direction du siège (500) sur une première extrémité et étant accouplé à l'arbre de direction inférieur (530) sur une seconde extrémité, l'arbre de direction inférieur (530) étant accouplé à l'arbre de direction supérieur (516) sur une première extrémité et étant accouplé à l'assemblage de roue arrière (552) sur une seconde extrémité.

12. Véhicule selon la revendication 5, dans lequel les manivelles pouvant être actionnées à la main (250) comprennent des tambours de manivelle (255) et dans lequel les roues avant (110) incluent des tambours de roue (270), les tambours de manivelle (255) étant accouplés aux tambours de roue (270) par des moyens pour un engagement positif.

13. Véhicule selon les revendications 2, 4 et 7, dans lequel le siège (115) est relié dans un état prêt à la mise en service à la roue arrière (120) par une chaîne flexible, une chaîne à rouleaux, un câble ou une courroie en nylon (185, 215).

14. Véhicule selon la revendication 4, dans lequel une chaîne (215) est entraînée autour d'un ergot commandé (180) qui est fixé sur l'assemblage de roue arrière (120), la chaîne (215) étant reliée de manière réglable à la première et à la seconde partie du siège (115) par un premier et par un second câble (220), la chaîne (215) étant en travers entre l'ergot commandé (180) ainsi que la première et la seconde partie du siège (115).

15. Véhicule selon la revendication 13, dans lequel une chaîne (185) est entraînée autour d'un ergot de commande (175) qui est fixé sur le siège (115) et d'un ergot commandé (180) qui est fixé sur l'assemblage de roue arrière (120), la chaîne étant en travers entre l'ergot de commande et l'ergot commandé.

16. Véhicule selon la revendication 15, dans lequel l'ergot de commande (175) est agencé sur un arbre de support de siège qui permet un alignement de la roue arrière par rapport à la position du siège.

17. Véhicule selon l'une quelconque des revendications ci-dessus, dans lequel les roues avant (110) sont montées chacune en rotation autour d'un axe en porte-à-faux qui est fixé sur le cadre (105).

18. Véhicule selon l'une quelconque des revendications ci-dessus, dans lequel le véhicule est configuré de manière à permettre à la fois la direction et la propulsion du véhicule à un opérateur qui ne peut se servir que d'une seule main.

19. Véhicule selon la revendication 1, comprenant en outre au moins une manivelle pouvant être actionnée à la main, agencée au-dessus des roues avant et reliée dans un état prêt à la mise en service à celles-ci pour la propulsion du véhicule.
